# EUROPEAN PATENT APPLICATION

(11) **EP 4 554 319 A1**
(43) Date of publication of application: **14.05.2025**
(21) Application number: 23834838.7
(22) Date of filing: 04.07.2023
(51) Int. Cl.: H04W 76/27, H04W 76/15

(54) **METHOD PERFORMED BY USER EQUIPMENT FOR RECOVERING RRC CONNECTION, AND USER EQUIPMENT**

(30) Priority: 07.07.2022 CN 202210807215
(71) Applicant: Sharp Kabushiki Kaisha, Sakai City, Osaka 590-8522 (JP)
(72) Inventor: LIU, Renmao, Pudong, Shanghai 201206 (CN); XIAO, Fangying, Pudong, Shanghai 201206 (CN)
(74) Representative: Müller Hoffmann & Partner
(86) International application number: PCT/CN2023/105702
(87) International publication number: WO 2024/008071

(57) **Abstract**

Provided in the present invention is an RRC connection resumption method performed by user equipment, including: transmitting, to a first network, an RRC resume request message requesting resumption of an RRC connection in the first network; receiving an RRC resume message from the first network; and when the RRC resume message indicates activation of a secondary cell group, if the user equipment prefers not to activate the secondary cell group, transmitting, to the first network, indication information indicating that the user equipment prefers not to activate the secondary cell group.

## Description

### TECHNICAL FIELD

The present invention relates to the technical field of wireless communications, and in particular to an RRC connection resumption method performed by user equipment, and user equipment.

### BACKGROUND ART

In recent years, multi-USIM card devices have become increasingly popular. For example, a user installs two USIM cards on a mobile phone supporting a plurality of USIM cards. One of the USIM cards is used for subscribing to private services, and the other USIM card is used for subscribing to office services. Existing devices that support a plurality of USIM cards are implemented on the basis of manufacturers, and have not been standardized by the 3GPP. Therefore, different manufacturers use different implementation means, and behaviors of user equipment (UE) units are likewise different from each other. In existing implementations, if these USIM cards are respectively registered to networks (the USIM cards may be registered to the same network or respectively registered to two or more networks), UE needs to receive paging from these networks. On the basis of transceiving capabilities of the UE, a possible scenario exists in which, when the UE receives paging of a current network, another network also initiates paging for the UE, or when the UE is communicating with a network, another network initiates paging for the UE. If the UE switches between different networks, a possible result is that the UE can no longer receive data from the current network when the UE switches to another network. This would compromise network performance. For example, the network transmits paging to the UE, but the UE does not receive this paging because the UE has switched to another network, or the UE switches to another network and therefore cannot receive scheduling of the current network. Some manufacturers proposed 3GPP standardization study on network accessing behaviors of UEs having a plurality of USIM cards and related networks, the benefit of which is that network performance can be improved on the basis of predictable UE behavior.

On the basis of the above-described reason, in December 2019, a work item for multi-SIM card devices in Release 17 was proposed by vivo at the 3rd Generation Partnership Project (3GPP) RAN#86 plenary meeting (see Non-Patent Document: RP-193263: New WID: Support of Multi-SIM devices in Rel-17), and was approved. One of the objectives of the work item is to define a mechanism for notifying network A when UE leaves network A. Network A is NR, and network B is LTE or NR. The UE is single-Rx/single-Tx, or the UE is dual-Rx/single-Tx.

At the 3GPP RAN#94bis meeting in December 2021, further enhancements to multi-USIM card UE having dual Rx/Tx capabilities were agreed upon, so that UE can be in an RRC connected state simultaneously in two networks (see Non-Patent Document: RP-213584 New WI on Dual Tx Rx MUSIM enhancements).

The present disclosure discusses relevant problems involved in achieving the above work objectives.

### SUMMARY OF THE INVENTION

An object of the present invention is to provide a method that can prevent an SCG corresponding to a first network from being activated when user equipment does not prefer to activate the SCG.

According to an aspect of the present invention, provided is an RRC connection resumption method performed by user equipment, comprising: transmitting, to a first network, an RRC resume request message requesting resumption of an RRC connection in the first network; receiving an RRC resume message from the first network; and when the RRC resume message indicates activation of a secondary cell group, if the user equipment prefers not to activate the secondary cell group, transmitting, to the first network, indication information indicating that the user equipment prefers not to activate the secondary cell group.

According to another aspect of the present invention, provided is an RRC connection resumption method performed by user equipment, comprising: transmitting, to a first network, an RRC resume request message requesting resumption of an RRC connection in the first network, wherein if the user equipment prefers not to activate a secondary cell group, the RRC resume request message comprises indication information indicating that the user equipment prefers not to activate the secondary cell group; receiving an RRC resume message from the first network; and resuming the RRC connection in the first network on the basis of the RRC resume message.

### BENEFICIAL EFFECTS OF PRESENT INVENTION

According to the solution of the present specification, an SCG corresponding to a first network can be prevented from being activated when user equipment does not prefer to activate the SCG.

### BRIEF DESCRIPTION OF THE DRAWINGS

The above and other features of the present invention will be more apparent from the following detailed description in combination with the accompanying drawings, in which:
FIG. 1 is a schematic diagram for showing an example of MUSIM-capable user equipment mentioned in the present specification.
FIG. 2 is an exemplary flowchart for showing a method performed by user equipment provided by a first implementation in the present specification.
FIG. 3 is another exemplary flowchart for showing a method performed by user equipment provided by the first implementation in the present specification.
FIG. 4 is an exemplary flowchart for showing a method performed by user equipment provided by a second implementation in the present specification.
FIG. 5 is an exemplary flowchart for showing a reconfiguration with sync method performed by user equipment provided by a third implementation in the present specification.
FIG. 6 is an exemplary flowchart for showing a reconfiguration with sync method performed by user equipment provided by a fourth implementation in the present specification.
FIG. 7 is another exemplary flowchart for showing a reconfiguration with sync method performed by user equipment provided by the fourth implementation in the present specification.
FIG. 8 is an exemplary flowchart for showing a secondary serving cell configuration method performed by user equipment provided by a fifth implementation in the present specification.
FIG. 9 is an exemplary flowchart for showing addition of a secondary serving cell in the secondary serving cell configuration method performed by user equipment provided by the fifth implementation in the present specification.
FIG. 10 is an exemplary flowchart for showing modification of a secondary serving cell in the secondary serving cell configuration method performed by user equipment provided by the fifth implementation in the present specification.
FIG. 11 is an exemplary flowchart for showing a method performed by user equipment provided by a sixth implementation in the present specification.
FIG. 12 is an exemplary flowchart for showing a MUSIM release instruction processing procedure in a method performed by user equipment provided by a sixth implementation in the present specification.
FIG. 13 is an exemplary flowchart for showing an RRC connection resumption method performed by user equipment provided by a seventh implementation in the present specification.
FIG. 14 is an exemplary flowchart for showing an RRC connection resumption method performed by user equipment provided by an eighth implementation in the present specification.
FIG. 15 is a block diagram of user equipment provided in the present specification.

### DETAILED DESCRIPTION OF PREFERRED EMBODIMENTS

The following describes the present disclosure in detail with reference to the accompanying drawings and specific embodiments. It should be noted that the present disclosure should not be limited to the specific embodiments described below. In addition, for simplicity, detailed description of the prior art not directly related to the present disclosure is omitted to prevent confusion in understanding the present disclosure.

The following describes some terms involved in the present disclosure. For the specific meanings of the terms, refer to the latest relevant 3GPP documents, for example, TS38.300, TS38.331, TS36.300, TS36.331, etc.
NAS: Non-Access Stratum.
AS: Access Stratum.
RRC: Radio Resource Control.
RRC_CONNECTED: RRC connected state.
RRC_INACTIVE: RRC inactive state.
RRC_IDLE: RRC idle state.
RLC: Radio Link Control.
CPA: Conditional PSCell Addition.
CPC: Conditional PSCell Change.
RAN: Radio Access Network.
BWP: Bandwidth Part.
USIM: Universal Subscriber Identity Module.
MUSIM: Multi-Universal Subscriber Identity Module.
Tx: transmitter.
Rx: receiver.
NR: New RAT, New Radio Access Technology.
gNB: a base station node providing NR user plane and control plane protocol terminations towards the UE, and connected, via the NG interface, to the 5G core network.
eNB: a base station node providing E-UTRAN user plane and control plane protocol terminations towards the UE, and connected to the EPC core network.
ng-eNB: a base station node providing E-UTRAN user plane and control plane protocol terminations towards the UE, and connected, via the NG interface, to the 5G core network.

Dual connectivity or multi-connectivity: meaning that UE operating in an RRC connected state establishes a physically wireless connection with more than one network node, and implements data transmission. In dual connectivity, UE having multi-Tx/Rx capabilities is configured to use resources provided by two network nodes that are connected via a non-ideal backhaul. One of the network nodes serves as a master node (MN, or MN gNB), and the other network node serves as a secondary node (SN, or SN gNB). The MN and the SN are connected via a network interface, and at least the MN is connected to a core network. The MN may be executed by one gNB/eNB/ng-eNB. A serving cell group controlled by the MN is referred to as a master cell group (MCG). That is, the MCG is associated with the MN. The MCG includes at least one primary serving cell operating on a primary frequency, and the primary serving cell is referred to as a primary cell (PCell). The UE performs an initial connection establishment procedure or initiates a connection reestablishment procedure on the PCell. If the MCG further includes other cells, then the other cells may be referred to collectively as a secondary serving cell (SCell). Correspondingly, the SN may be executed by one or more gNBs/eNBs/ng-eNBs. A serving cell group controlled by the SN is referred to as a secondary cell group (SCG). That is, the SCG is associated with the SN. The SCG at least includes a primary serving cell, which is referred to as a primary second cell (PSCell). When a reconfiguration with sync (a reconfiguration with sync related to the SCG or an SCG change) procedure is performed, the UE performs random access (only when necessary) on the PSCell. If the SCG further includes other cells, then the other cells may be referred to collectively as a secondary serving cell (SCell). A signaling radio bearer (SRB) may be established between the SN and the UE, and is commonly referred to as SRB3. SRB3 is used for a specific RRC message transmitted on a DCCH logical channel, applicable to UE in (NG)EN-DC or NR-DC. SRB3 may be used to transmit an RRC message between the SN and the UE, e.g., an SCG-associated measurement configuration and report. In the present disclosure, an SpCell may refer to the PCell of the MCG or the PSCell of the SCG.

An SCG radio bearer is present only in an SCG and has one RLC bearer, or has two RLC bearers in carrier aggregation packet duplication. The SCG radio bearer includes an SCG signaling radio bearer (SRB) and an SCG data radio bearer (DRB).

SRB1 is used to bear all RRC messages using DCCH logical channels and NAS messages before SRB2 is established.

SRB2 is used to bear NAS messages and all RRC messages using DCCH logical channels and including recorded measurement information.

EN-DC: E-UTRA-NR dual connectivity, E-UTRA being an MN, and NR being dual connectivity for an SN and being connected to an EPC.

NGEN-DC: NG-RAN, E-UTRA-NR dual connectivity, and connected to a 5G core network (5GC).

NR DC: NR-NR dual connectivity, when and only when nr-SCG is set for configured mrdc-SecondaryCell Group.

MR-DC: Multi-Radio Dual Connectivity, including (NG)EN-DC, NE-DC, and NR-DC.

In the present disclosure, a network (or a network node), a base station (or a base station node), and a RAN may be used interchangeably. The network may be a Long Term Evolution (LTE) network, an NR network, an enhanced Long Term Evolution (eLTE) network, or another network defined in a subsequent evolved version of the 3GPP.

In the present disclosure, user equipment (UE) may refer to a device that physically supports a plurality of USIM cards (two or more USIM cards). The USIM can be a physical SIM or eSIM. The device is equipped with two or more USIM cards, and each USIM card is associated with one network (i.e., has established an RRC connection with one network). The plurality of USIM cards may be from the same operator or different operators. From the perspective of the networks, different USIM cards may correspond to different UEs, and each USIM card corresponds to one UE. Unless otherwise specified, the present disclosure does not distinguish therebetween. Those skilled in the art can easily determine, according to the context, whether UE refers to UE supporting a plurality of USIM cards or UE respectively corresponding to each USIM card in a device supporting a plurality of USIM cards. User equipment configured with a plurality of USIM cards can receive and/or transmit data from and/or to a plurality of networks by using single-Rx/single-Tx or dual-Rx/single-Tx by means of, e.g., time division multiplexing. UE having two Txs and two Rxs (dual-Tx/dual-Rx) can simultaneously transmit data to two networks, and can also simultaneously receive data from two networks. The hardware capabilities of the MUSIM UE are shared by two SIM cards, and the related capabilities are dynamically split between the two SIM cards. This results in a brief hardware conflict, causing the UE to release some resources from one SIM card for use by the other SIM card. For example, when SIM A of the UE is in an RRC connected state in network A and SIM B is in an RRC idle state or an RRC inactive state in network B, two radio frequency (RF) chains or two transceivers are occupied by SIM A for communication with network A. If SIM B needs to establish an RRC connection with network B, one of the radio frequency chains needs to be switched to SIM B. If network A is not aware of the change in the radio frequency chain capability of the UE, data of network A may be lost, and radio resources may be wasted.

The embodiments of the present disclosure use a UE configured with two USIM cards as an example, and those skilled in the art could easily expand the same example to situations involving a plurality of USIM cards.

The following describes the fields involved in the present disclosure:
The masterCellGroup field is used to configure the master cell group (MCG).

The spCellConfig field contains the parameter of the SpCell (i.e., the PCell of the MCG or the PSCell of the SCG) of the corresponding cell group.

The reconfigurationWithSync field contains the parameter for reconfiguration with sync to the target SpCell.

The CellGroupConfig field is used to configure the master cell group (MCG) or the secondary cell group (SCG).

The scg-State field is used to indicate that the SCG is in an inactive state. The base station indicates, by not including the scg-State field in an RRC reconfiguration message RRCReconfiguration, that the SCG is configured to be in an activated state, and indicates, by including the scg-State field in the RRC reconfiguration message, that the SCG is configured to be in the inactive state.

The bfd-and-RLM field is used to indicate, when the SCG is deactivated, whether the UE performs beam failure detection (BFD) and radio link monitoring (RLM).

The secondaryCellGroup field contains the configuration (related to (NG)EN-DC or NR-DC) of the SCG, and the secondaryCellGroup field contains the CellGroupConfig field.

The CellGroupConfig field is used to configure one MCG or SCG, and one cell group consists of one MAC entity, a set of logical channels with associated RLC entities, one SpCell, and one or more SCells.

The mrdc-SecondaryCellGroup field contains an RRC message for SCG configuration in NR-DC or NE-DC. In NR-DC, the mrdc-SecondaryCellGroup field contains an RRCReconfiguration message generated entirely by the SN gNB, and the RRCReconfiguration message generated by the SN gNB may contain the secondaryCellGroup field, the otherConfig field, the conditionalReconfiguration field, and the measConfig field.

The otherConfig field contains a configuration related to another configuration, such as configuring the UE to report assistance information to inform the gNB about a discontinuous reception (DRX) preference of the UE for power saving, etc.

The conditionalReconfiguration field configures a candidate target SpCell(s) and an execution condition(s) for a conditional handover and conditional PSCell change.

The measConfig field defines configurations of measurement performed by the UE, intra-frequency, inter-frequency, and inter-RAT movement, and measurement intervals.

The nr-SCG field is contained in the mrdc-SecondaryCellGroup field, and is used to indicate that the dual connectivity is NR-DC, and in this case, the RRC reconfiguration message contained in mrdc-SecondaryCellGroup is generated entirely by the SN gNB.

The sCellToAddModList field is used to indicate a list of added or modified SCells.

The sCellIndex field is used to identify one SCell.

The sCellState field indicates whether the SCell shall be considered to be in the activated state upon SCell configuration. If the RRC reconfiguration message contains the field, and the value of the field is set to 'activated', it is indicated that the SCell is in the activated state upon SCell configuration. If the RRC reconfiguration message does not contain the field, it is indicated that the SCell is in the inactive state upon SCell configuration.

The firstActiveDownlinkBWP-Id field is used, upon SpCell configuration, to contain the identity (ID) of an activated downlink BWP when RRC reconfiguration is performed, or contain the identity (ID) of the downlink BWP used for RLM, BFD, and measurement when the SCG is deactivated (this meaning is indicated only when the RRC reconfiguration message indicates that the UE needs to perform RLM, BFD, and measurement). When the field is used for SCell configuration, the field contains the identity (ID) of the downlink BWP used upon SCell activation.

When the firstActiveUplinkBWP-Id is used for SpCell configuration, firstActiveUplinkBWP-Id contains the identity (ID) of an uplink BWP activated when the RRC reconfiguration is performed. When the field is used for SCell configuration, the field contains the identity (ID) of the uplink BWP used upon SCell activation.

The sCellConfigCommon field corresponds to the ServingCellConfigCommon field for configuring a configurable cell-specific parameter of a serving cell of the UE. The ServingCellConfigCommon field contains a parameter acquired from a synchronization signal block (SSB), a master information block (MIB), or a system information block (SIB) when UE in the IDLE state accesses a cell, and upon SCell configuration, the network provides the foregoing information via dedicated signaling containing this field.

The sCellConfigDedicated field corresponds to the ServingCellConfig field, and the ServingCellConfig field is used to configure (i.e., add or modify) a serving cell for the UE, and this serving cell may be an SpCell or an SCell of an MCG or an SCG.

The VarConditionalReconfig variable includes the accumulated configuration of the conditional handover (CHO), conditional PSCell addition (CPA), or conditional PSCell change (CPC) configurations including the pointers to conditional handover (CHO), conditional PSCell addition (CPA), or conditional PSCell change (CPC) execution condition (associated measId(s)) and the stored target candidate SpCell RRCReconfiguration.

The condReconfigID field is used to identify a CHO, CPA, and CPC configuration.

The condRRCReconfig field contains an RRC reconfiguration message that applies when the condition is satisfied.

The condTriggerConfig field is used for the CHO, CPA, and CPC configuration and setting of CHO, CPA and CPC trigger conditions.

The measId field is used to identify the measurement identity for which the reporting is being performed.

The DRB-Identity field is used to identify a DRB used by one UE unit.

The RLC-BearerConfig field is used to configure an RLC entity, a corresponding logical channel in MAC, and an (serving radio bearer) association with a PDCP entity.

An SCG failure information message, i.e., the SCGFailureInformation message, is used to provide SCG failure-related information detected by the UE.

The RRC resume request message RRCResumeRequest or RRCResumeRequestl is used to request resumption of a suspended RRC connection or to perform RAN-based notification area (RNA) updating. The UE may select, on the basis of whether SIB1 signals the useFullResumeID field, RRCResumeRequest or RRCResumeRequestl to request resumption of an RRC connection. If SIB1 signals the useFullResumeID field, RRCResumeRequest1 is used to request resumption of an RRC connection. If SIB1 does not signal the useFullResumeID field, RRCResumeRequest is used to request resumption of an RRC connection.

The RRC resume RRCResume message is used to resume a suspended RRC connection. The RRC reconfiguration message RRCReconfiguration is an instruction for modifying an RRC connection.

The UEAssistanceInformation message is used for indicating UE assistance information to the network.

The RRC reconfiguration complete message RRCReconfigurationComplete is used to confirm successful completion of RRC connection reconfiguration.

If an upper layer (e.g., the RRC layer) indicates activation of an SCG (an SCG in the activated state), the following may be performed: transmitting an SRS on a PSCell, reporting CSI of the PSCell, monitoring a PDCCH on the PSCell, transmitting a PUCCH on the PSCell, etc.

If the upper layer (e.g., the RRC layer) indicates deactivation of an SCG, the following may be performed: deactivating all SCells of the SCG, deactivating the SCG, clearing a configured downlink assignment or a configured uplink grant of type 2 associated with a PSCell, suspending a configured uplink grant of type 1 associated with the PSCell, resetting MAC, etc.

For the SCG in the inactive state, no SRS is transmitted on the PSCell, the CSI of the PSCell is not reported, no UL-SCH is transmitted on the PSCell, no PUCCH is transmitted on the PSCell, etc.

In the present disclosure, that the UE considers that the SCG or the SCell is activated may mean that the UE instructs a lower layer to activate the SCG or the SCell.

It should be particularly noted that in dual connectivity, although the UE performs data transmission with the two network nodes MN and SN, the UE establishes an RRC connection with only the MN. In the MUSIM, the UE may respectively establish RRC connections with networks via respective SIM cards.

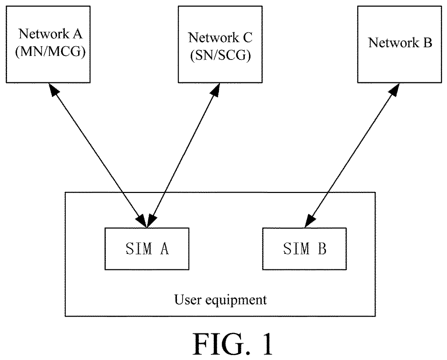

FIG. 1 is a schematic diagram of a UE with a MUSIM capability in dual connectivity in network A. In FIG. 1, a SIM card A of UE establishes an RRC connection with network A (denoted as a first network), and a SIM card B establishes an RRC connection with network B (denoted as a second network). The UE is configured with dual connectivity by network A. Network A is an MN, and network C is an SN. Embodiments of the present disclosure are based on the scenario in FIG. 1.

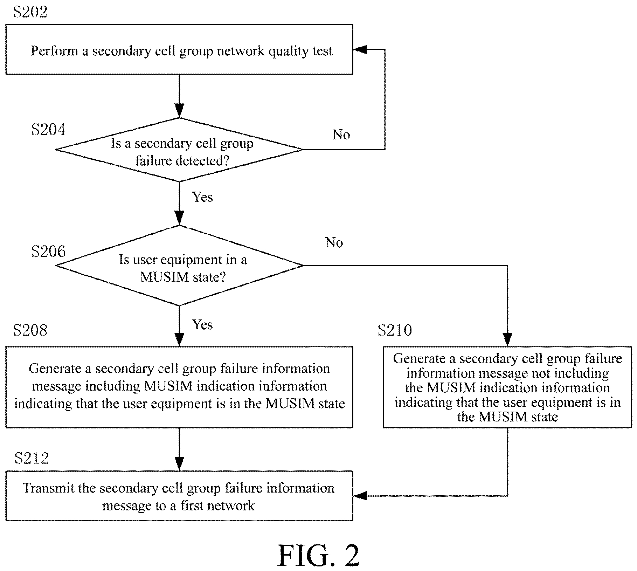

FIG. 2 is an exemplary flowchart for showing a method performed by user equipment provided by a first implementation in the present specification. In the first implementation, the user equipment is in an RRC connected state in the first network, and is configured in the first network so as to be required to perform a secondary cell group network quality test. In the first network, a secondary cell group in which the user equipment is located is in the inactive state.

As shown in FIG. 2, in S202 to S204, a secondary cell group network quality test is performed. The network quality test may include RLM and BFD.

Upon detecting a secondary cell group failure, a secondary cell group failure information message transmission procedure to the first network is initiated. The secondary cell group failure information message transmission procedure is used to transmit, to the first network, a secondary cell group failure information message indicating that the secondary cell group in which the user equipment is located in the first network has failed. For example, upon detecting a beam failure, it may be determined that a secondary cell group failure is detected.

Specifically, the secondary cell group failure information message transmission procedure may include S206 to S212.

In S206, it is determined whether user equipment is in a MUSIM state. The MUSIM state refers to a state in which capabilities of the user equipment are restricted, or, in other words, a state in which the user equipment can use only part of the capabilities thereof to communicate with the first network. For example, the following situation is considered a type of MUSIM state: user equipment including a plurality of SIMs is in the RRC connected state in the first network, and maintains an RRC connection with a second network different from the first network, and the user equipment prefers not to release the RRC connection with the second network.

In the present specification, it may be determined that the user equipment is in the MUSIM state when any one of the following conditions is satisfied: the user equipment is in the RRC connected state in the second network that is different from the first network; the user equipment performs uplink data transmission or downlink data transmission in the second network; the secondary cell group in which the user equipment is located in the first network cannot be activated; the secondary cell group in which the user equipment is located in the first network cannot be configured; the user equipment prefers not to activate the secondary cell group in the first network; the user equipment is in a user equipment capability restricted state in the first network; and Part of hardware functions of the user equipment are occupied and thus cannot be used for data transmission performed by the user equipment in the first network.

When the user equipment is in the MUSIM state, in S208, MUSIM indication information indicating that the user equipment is in the MUSIM state is included in a secondary cell group failure information message. In other words, the secondary cell group failure information message including the MUSIM indication information indicating that the user equipment is in the MUSIM state is generated.

As an example, the MUSIM indication message may be included in the secondary cell group failure information message in any one of the following manners: adding, in the secondary cell group failure information message, a field for indicating that the user equipment is in the MUSIM state; and conferring, in the secondary cell group failure information message, a value for indicating that the user equipment is in the MUSIM state upon a field for indicating a cause of a secondary cell group failure.

Then, in S212, the secondary cell group failure information message including the MUSIM indication information is transmitted to the first network. Upon receiving the secondary cell group failure information message, the first network can learn that the secondary cell group of the user equipment has failed, and may configure a new secondary cell group for the user equipment. In this case, since the received secondary cell group failure information message includes the MUSIM indication information, when the first network configures a new secondary serving cell for the user equipment, the first network considers the case that the user equipment is in the MUSIM state, thereby preventing an activated SCG from being configured for the user equipment. In this way, it is possible to prevent problems such as resource waste and data loss caused by data no longer being able to be smoothly transmitted via the SCG because some hardware resources of the user equipment are occupied even if the SCG is activated.

When the user equipment is not in the MUSIM state, in S210, a secondary cell group failure information message not including the MUSIM indication information indicating that the user equipment is in the MUSIM state is generated. Then, in S212, the secondary cell group failure information message not including the MUSIM indication information indicating that the user equipment is in the MUSIM state is transmitted to the first network.

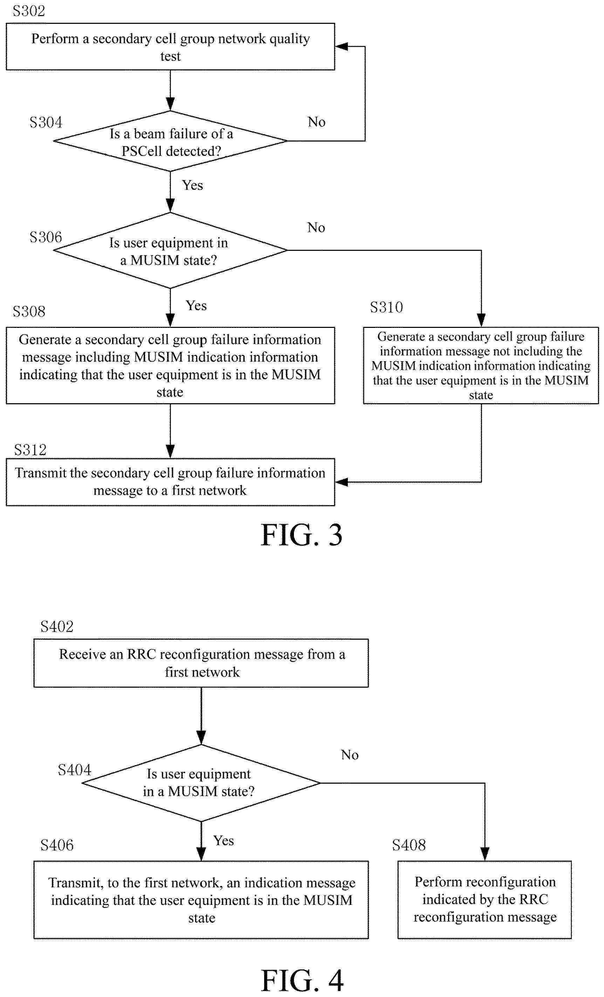

FIG. 3 is another exemplary flowchart for showing a method performed by user equipment provided by the first implementation in the present specification. FIG. 3 differs from FIG. 2 in respect of S304. S302 in FIG. 3 is the same as S202 described above, and S306 to S312 are respectively the same as S206 to S212 described above.

In S304, it is determined whether a detected secondary cell group failure is a beam failure of a PSCell.

When the detected secondary cell group failure is a beam failure of the PSCell, the following secondary cell group failure information message transmission procedure is performed.

Further, in the present specification, whether part of hardware capabilities of the user equipment are allowed to be used to communicate with the first network may be configured by the first network. It should be noted that the part of the hardware capabilities of the user equipment being allowed to be used to communicate with the first network may be expressed as the UE being configured with assistance information reporting, for the purpose of the MUSIM, that the UE capabilities are restricted in the first network (or reporting that the UE capabilities are restricted in the first network or reporting the UE capabilities used in the first network).

In the case that the user equipment is configured by the first network so as to be allowed to use only part of the hardware capabilities of the user equipment to communicate with the first network, the secondary cell group failure information message transmission procedure may be performed, that is, the operation of determining whether the user equipment is in the MUSIM state may be performed. Further, when the user equipment is in the MUSIM state, the MUSIM indication information indicating that the user equipment is in the MUSIM state is included in the secondary cell group failure information message. In this case, the user equipment needs to notify that the user equipment is in the MUSIM state.

In another aspect, in the case that the user equipment is configured by the first network so as not to be allowed to use only part of the hardware capabilities of the user equipment to communicate with the first network or is not configured by the first network so as to be allowed to use only part of the hardware capabilities of the user equipment to communicate with the first network, and in the case that the user equipment needs to establish an RRC connection with the second network, the RRC connection with the first network is to be released. That is, in this case, there is no MUSIM state.

Specific embodiments of the first implementation will be described below.

### Embodiments in which the UE detects a PSCell beam failure of the SCG in the inactive state

Embodiment 1 of the present disclosure aims to solve a related problem involved in transmitting an SCG failure information message to network A when UE that has at least dual Rx/Tx capabilities and that is in the RRC connected state in both network A and network B detects a PSCell beam failure of the SCG in the inactive state but considers that the priority of network B is higher, thereby preventing network A from configuring an SCG in the activated state for the UE upon receiving the SCG failure information message.

### Embodiment 1

In the present embodiment, the UE is dual-linked in network A. The SCG is in the inactive state, but is configured to be required to perform beam failure detection and radio link monitoring. Specifically, the UE receives, from a base station, an RRC reconfiguration message including SCG configuration information (i.e., the RRC reconfiguration message includes the secondaryCellGroup field or the mrdc-SecondaryCellGroup field), and the SCG is configured to be in the inactive state but needs to perform BFD and RLM (i.e., the SCG configuration information includes the bfd-and-RLM field, of which the value is set to "true"). The UE configures the SCG according to the received RRC reconfiguration message.

When the SCG is in the inactive state and a PSCell beam failure is detected, the UE initiates an SCG failure information transmission procedure, which specifically includes at least one of the following:
1) Stopping a timer T304 of the SCG (which is performed only when T304 of the SCG is running). T304 is started upon reception of an RRC reconfiguration message including reconfiguration with sync related to the SCG that is configured to be in the inactive state (start upon reception of RRCReconfiguration including reconfiguration With Sync for the SCG not indicated as deactivated in the NR message containing the RRCReconfiguration message), and is stopped upon successful completion of random access or release of the SCG on the SPCell.
2) Stopping conditional reconfiguration evaluation of CPA and/or CPC (which is performed only when CPA and/or CPC is configured).
3) Initiating transmission of an SCG failure information message.

The transmission of the SCG failure information message SCGFaulureInformation includes the following operation:
Setting, by the UE, contents of the SCGFaulureInformation message as follows:
   If the UE initiates transmission of the SCGFaulureInformation message due to a beam failure of the PSCell while the SCG is deactivated, it is further determined whether the UE is in the MUSIM state. If the UE is in the MUSIM state, indication information that the UE is in the MUSIM state is included in the SCGFailureInformation message, otherwise, the indication information that the UE is in the MUSIM state is not included in the SCGFailureInformation message.

The indication information that the UE is in the MUSIM state may be implemented via the following several implementations:
In an implementation, a new field musim is added to the SCGFailureInformation message to indicate that the UE is in the MUSIM state. Specifically, if the UE is in the MUSIM state, the value of the failureType field for indicating the cause in the SCGFailureInformation message is set to "other", and the field failureType-v1610 for further indicating the cause in the SCGFailureInformation message is set to "beamFailure". In addition, the musim field is included to indicate that the UE is in the MUSIM state, or the value of the field musim is set to a value, for example "true", indicating that the UE is in the MUSIM state. If the UE is not in the MUSIM state, the value of failureType is set to "other", and failureType-v1610 is set to "beamFailure". In addition, the SCGFailureInformation message does not include the musim field, or the SCGFailureInformation message includes the musim field, but the value thereof is set to a value corresponding to the UE not being in the MUSIM state, for example, the value of the musim field is "false".

In an implementation, the value of a field (e.g., the failureType-v1610 field) for indicating the cause of the SCG failure is added, and a new value is set for the field to indicate that the UE is in the MUSIM state or the UE that detects the SCG beam failure is in the MUSIM state or the UE in the MUSIM state detects the SCG beam failure or the UE is in the MUSIM state and detects the SCG beam failure. For example, when the value of failureType-v1610 is "musim", it is indicated that the UE is in the USIM state, or it is indicated that the UE in the MUSIM state detects the PSCell beam failure of the inactive SCG.

Upon receiving the SCG failure information message, the network may determine, according to whether the message contains the indication identifier indicating that the UE is in the MUSIM state, the state of the SCG reconfigured for the UE. For example, if the SCG failure information message received by the network contains the indication identifier that the UE is in the MUSIM state, the SCG reconfigured for the UE is set to the inactive state, otherwise, the SCG may be set to the activated state.

In the present disclosure, the UE being in the MUSIM state includes: the UE is in the RRC connected state in network B, the UE is performing a MUSIM operation (i.e., the UE is performing or needs to perform a MUSIM operation that cannot be completed within a MUSIM interval), the UE is simultaneously in the RRC connected state in the two networks, or the SCG cannot be activated, or the SCG cannot be configured, the UE does not prefer to activate the SCG (i.e., the UE prefers not to activate the SCG, or the UE prefers that the SCG is in the inactive state), part (e.g., a transceiver or a radio frequency chain) of the UE capabilities are occupied (or occupied by another network), only part of the UE capabilities can be used for communication with network A, the UE capabilities of the UE in network A are restricted, the UE is in a UE capability restricted state in network A, the UE prefers to restrict the UE capabilities in network A, and the UE capabilities are simultaneously shared between a plurality of networks. In a carrier aggregation scenario, the UE being in the MUSIM state further includes: the UE does not desire to activate an SCell, the UE does not desire to activate an SCell inter-frequency with the PCell, the UE prefers that the SCell is in the inactive state, and the UE prefers that the SCell inter-frequency with the PCell is in the inactive state.

In an embodiment of the present disclosure, the UE considering that the priority of network B is higher includes: the UE does not release the RRC connection with network B, the UE prefers to maintain the MUSIM state, the UE prefers not to activate the SCG, the UE prefers not to activate the SCell, and the UE prefers not to activate the SCell inter-frequency the PSCell. The condition that the UE is in the MUSIM state may be replaced with the UE considering that the priority of network B is higher or the UE being in the MUSIM state and considering that the priority of network B is higher.

It should be noted that in the embodiments of the present disclosure, the condition for determining whether the UE is in the MUSIM state may be replaced by determining, only when the UE is configured by network A so as to be allowed to request to enter the MUSIM state, whether the UE is in the MUSIM state. That is, if the UE is configured so as to be allowed to request to enter the MUSIM state and the UE is in the MUSIM state, the operation that should be performed when that the UE is in the MUSIM state is satisfied in the embodiment is performed. The base station may configure, via the RRC reconfiguration message, whether to allow the UE to request to enter the MUSIM state (or configure whether to allow the UE to request to enter the MUSIM state or to request to be in the UE capability restricted state, or configure whether to allow the UE to request to restrict the UE capabilities). Accordingly, the UE being not in the MUSIM state means that the UE is in the RRC connected state only in one of the networks (e.g., network A), or the UE does not perform a MUSIM operation, or the SCG can be activated, or the SCG can be configured, or the UE capabilities (e.g., the transceiver or the radio frequency chain) are not occupied by other networks, or communication with network A can use all of the UE capabilities or the UE capabilities of the UE in network A are not restricted, or the UE is not in the UE capability restricted state in network A or the UE prefers not to restrict the UE capabilities in network A. In a carrier aggregation scenario, the UE being not in the MUSIM state further includes: the SCell can be activated, the SCell inter-frequency with the PCell can be activated, the UE does not prefer that the SCell is in the inactive state, and the UE does not prefer that the SCell inter-frequency with the PCell is in the inactive state.

In the present disclosure, an embodiment obtained by replacing the UE being in the MUSIM state with the UE being configured to be capable of requesting to enter or exit the MUSIM state and the UE being in the MUSIM state also falls within the scope of protection of the present disclosure, and an embodiment obtained by replacing the UE being not in the MUSIM state with the UE being configured to be capable of requesting to enter or exit the MUSIM state and the UE being not in the MUSIM state or if the UE is not configured to be capable of requesting to enter or exit the MUSIM state also falls within the scope of protection of the present disclosure. The UE requesting to exit the MUSIM state may include: the UE releases the RRC connection in network B, the UE does not perform a MUSIM operation (i.e., the UE does not perform or does not need to perform a MUSIM operation that cannot be completed within a MUSIM interval), the UE is in the RRC connected state only in the first network, or the SCG can be activated, or the SCG can be configured, the UE capabilities (e.g., a transceiver or a radio frequency chain) are not occupied (or not occupied by another network), all of the UE capabilities can be used for communication with network A, the UE capabilities of the UE in network A are not restricted, the UE is not in the UE capability restricted state in network A, and the UE prefers not to restrict the UE capabilities in network A. In a carrier aggregation scenario, the UE being not in the MUSIM state further includes: the SCell may be activated, and the SCell inter-frequency with the PCell may be activated.

Network A may configure, for the UE via the RRC reconfiguration message, whether to allow the UE to request to enter or exit the MUSIM state or whether to allow the UE to request to restrict the UE capabilities in the current network. In this case, only when network A performs configuration to allow the UE to enter or exit the MUSIM state can the UE indicate, to the network, information of whether the UE is in the MUSIM state. If the UE is configured by network A so as to be capable of requesting to enter or exit the MUSIM state, when the UE needs to enter the MUSIM state, an RRC message containing indication information for requesting to enter the MUSIM state is transmitted to network A. For example, if the UE is configured by network A so as to be capable of requesting to enter the MUSIM state, when the UE needs to establish an RRC connection with network B, the UE requests entry into the MUSIM state from network A, and when the UE releases the RRC connection with the network B, the UE may indicate, to network A, that UE has exited the MUSIM state, so that network A can use all of the UE capabilities.

It should be noted that performing configuration for the UE to allow the UE to request to enter or exit the MUSIM state may be replaced with allowing the UE to request to restrict the UE capabilities in the current network, or allowing part of the hardware capabilities of the user equipment to be used to communicate with the first network, or configuring, for the UE, assistance information reporting, for the purpose of the MUSIM, restriction of the UE capabilities in the first network, or configuring, for the UE, assistance information reporting, for the purpose of the MUSIM, that the UE capabilities are restricted in the first network, or configuring, for the UE, assistance information reporting, for the purpose of the MUSIM, the UE capabilities used in the first network, or configuring, for the UE, assistance information reporting, for the purpose of the MUSIM, entry into or exit from the UE capability restricted state in the first network. In the embodiments of the present disclosure, an embodiment obtained by adopting any one of these description manners also falls within the scope of the present specification.

FIG. 4 is an exemplary flowchart for showing a method performed by user equipment provided by a second implementation in the present specification.

As shown in FIG. 4, in S402, an RRC reconfiguration message is received from a first network. Here, the RRC reconfiguration message is used to configure a new secondary cell group and configure the new secondary cell group to be in an activated state, or is used to activate an existing secondary cell group. That is, the received RRC reconfiguration message includes configuration information for configuring a new secondary cell group and configuring the new secondary cell group to be in the activated state, or includes configuration information for activating an existing secondary cell group.

Upon receiving the RRC reconfiguration message from the first network, in S404, it is determined whether user equipment is in a MUSIM state.

If the user equipment is in the MUSIM state, in S406, an indication message indicating that the user equipment is in the MUSIM state is transmitted to the first network.

In one example, when the user equipment is in the MUSIM state, if the RRC reconfiguration message is used to configure a new secondary cell group and configure the new secondary cell group to be in the activated state, the user equipment does not perform secondary cell group configuration indicated by the RRC reconfiguration message. In this case, the indication message includes information that the secondary cell group configuration is not performed.

In another example, when the user equipment is in the MUSIM state, if the RRC reconfiguration message is used to configure a new secondary cell group and configure the new secondary cell group to be in the activated state, the user equipment performs secondary cell group configuration indicated by the RRC reconfiguration message, but does not activate the configured new secondary cell group. In this case, the indication message includes information that the new secondary cell group is not activated.

In another example, when the user equipment is in the MUSIM state, if the RRC reconfiguration message is used to activate the existing secondary cell group, the user equipment does not perform secondary cell group activation indicated by the RRC reconfiguration message. In this case, the indication message includes information that the secondary cell group activation is not performed.

Further, upon receiving the RRC reconfiguration message, the user equipment may also determine whether currently available resources thereof are sufficient to activate a new secondary cell group or an existing secondary cell group. When the currently available resources of the user equipment are sufficient to activate the new secondary cell group or the existing secondary cell group, the new secondary cell group or the existing secondary cell group may be activated regardless of whether the user equipment is in the MUSIM mode. How to determine whether the currently available resources are sufficient to activate the new secondary cell group or the existing secondary cell group may, for example, be implemented by internal logic of the user equipment, and the internal logic may be provided by a providing end of the user equipment. As an example, determination may be performed according to, for example, whether the occupancy of hardware resources is less than a given threshold or the like.

Further, whether part of the hardware capabilities of the user equipment are allowed to be used to communicate with the first network may be configured by the first network. In the case that the user equipment is configured by the first network so as to be allowed to use only part of the hardware capabilities of the user equipment to communicate with the first network, the operation of determining whether the user equipment is in the MUSIM state may be performed.

Specific embodiments of the second implementation will be described below.

### Embodiments in which the network configures an activated SCG for the UE

Embodiment 2 of the present disclosure aims to solve a related problem involved in network A configuring an SCG for UE having at least dual Rx/Tx capabilities or network A instructing the UE to activate an SCG in the inactive state when the UE is in the RRC connected state in both network A and network B, but the UE is in the MUSIM state, so as to prevent the UE in the MUSIM state from activating the SCG and cause the state of the UE to be consistent with the state of the SCG in network A.

### Embodiment 2

The present embodiment considers that the UE receives an RRC reconfiguration message RRCReconfiguration from network A, and the RRC reconfiguration message is used to configure an SCG and indicates that the SCG is in the activated state or the RRC reconfiguration message is used to activate the SCG, which specifically includes the following cases:
**Case 1 (the MN configures and activates an SCG):** The UE receives an RRC reconfiguration message (in the embodiments of the present disclosure, the RRC reconfiguration message refers to an RRC reconfiguration message generated by the MN, transmitted on SRB1, and not included in another RRC message) from network A (the MN). The RRC reconfiguration message is transmitted on SRB1, and includes configuration information of the SCG. That is, the configuration information of the SCG is provided by including the secondaryCellGroup field in the RRC reconfiguration message (that is, the RRC reconfiguration message is generated by the MN). The SCG is configured to be in the activated state. This is related to the case in which the RRC reconfiguration message is used to configure the SCG for the UE. The UE is not previously configured with the SCG. In this case, if the UE is in the MUSIM state, the UE may configure the SCG according to the configuration information of the SCG carried in the RRC reconfiguration message, but does not activate the SCG, and the UE indicates, to network A (or the MN), information that the UE is in the MUSIM state or related information for indicating that the SCG is configured but not activated (for example, indicated in an RRC reconfiguration complete message). Alternatively, the UE may not configure the SCG, and may indicate, to network A, information that the UE is in the MUSIM state or information for indicating that the SCG is not configured (for example, indicated in an RRC reconfiguration complete message).

For case 1, if the UE uses the operation of configuring the SCG but skipping activating the SCG, the operation specifically includes: if the RRC reconfiguration message does not contain mrdc-SecondaryCellGroupConfig (this is an optional condition) and if the RRC reconfiguration message does not contain scg-State and the UE is not in the MUSIM state, performing an SCG activation procedure without an SN message. Optionally, if the RRC reconfiguration message does not contain scg-State and the UE is in the MUSIM state, the UE indicates, to the network MN, information that the UE is in the MUSIM state or related information for indicating that the SCG is configured but not activated (for example, indicated in an RRC reconfiguration complete RRCReconfigurationComplete message). In this case, the UE does not activate the SCG.

For case 1, if the UE does not configure the SCG, the operation specifically includes: if the RRC reconfiguration message contains the configuration information of the SCG and the SCG is configured to be in the inactive state, or if the RRC reconfiguration message contains the configuration information of the SCG and the SCG is configured to be in the activated state but the UE is not in the MUSIM state, performing cell group configuration of the SCG. If the RRC reconfiguration message does not contain mrdc-SecondaryCellGroupConfig (this condition is optional) and if the RRC reconfiguration message contains the configuration information of the SCG but does not contain scg-State and the UE is in the MUSIM state, the UE indicates, to the network MN, information that the UE is in the MUSIM state or related information for indicating that the SCG is not configured (for example, indicated in an RRC reconfiguration complete RRCReconfigurationComplete message). In this case, the UE does not perform cell group configuration of the SCG.

**Case 2 (the MN activates a configured SCG):** The UE receives an RRC reconfiguration message from network A (the MN). The RRC reconfiguration message is transmitted on SRB 1, and does not contain scg-State so as to indicate activation of a configured SCG. This is related to the case in which the MN activates the configured SCG. In this case, if the UE is in the MUSIM state and the UE considers that the priority of network B is higher, the SCG is not activated. If the UE determines not to activate the SCG, the UE indicates, to the network MN, information that the UE is in the MUSIM state or related information for indicating that the SCG is not activated (e.g., indicated in an RRC reconfiguration complete message).

Specifically, if the RRC reconfiguration message is received from SRB1 and the UE is in NR-DC and the RRC reconfiguration message does not contain mrdc-SecondaryCellGroupConfig (this condition is optional) and if the RRC reconfiguration message does not contain scg-State and the UE is not in the MUSIM state, an SCG activation procedure without an SN message is performed. If the RRC reconfiguration message is received from SRB 1 and the UE is in NR-DC and the RRC reconfiguration message does not contain mrdc-SecondaryCellGroupConfig and if the RRC reconfiguration message does not contain scg-State but the UE is in the MUSIM state, the UE indicates, to the network MN, information that the UE is in the MUSIM state or related information for indicating that the SCG is not activated (for example, indicated in an RRC reconfiguration complete message). In this case, the UE does not activate the SCG.

**Case 3 (the SN configures an SCG and the MN activates the SCG):** The UE receives, on SRB1, a first RRC reconfiguration message contained in the hr-SCG field in the mrdc-SecondaryCellGroup field, and an RRC message (e.g., a second RRC reconfiguration message) containing the first RRC reconfiguration message does not contain the scg-State field so as to indicate that the SCG is configured to be in the activated state. This is related to the case in which configuration information of the SCG is completely provided by the SN and the MN configures the SCG to be in the activated state. In this case, if the UE is in the MUSIM state, the UE may not configure the SCG, or the UE configures but does not activate the SCG. Optionally, the UE indicates, to the network MN and/or SN, information that the UE is in the MUSIM state or information that the SCG is not configured or information that the SCG is configured but not activated.

For case 3, if the UE does not configure the SCG, the operation specifically includes: if the first RRC reconfiguration message is an RRC reconfiguration message received on SRB 1 and contained in the nr-SCG field in the mrdc-SecondaryCellGroup field and if the first RRC reconfiguration message contains secondaryCellGroup, then:
if the RRC message containing the first RRC reconfiguration message contains scg-State, performing cell group configuration of the SCG; if the RRC message containing the first RRC reconfiguration message does not contain scg-State and the UE is not in the MUSIM state, performing cell group configuration of the SCG; otherwise, if the RRC message containing the first RRC reconfiguration message does not contain scg-State and the UE is in the MUSIM state, skipping performing cell group configuration of the SCG; and optionally, if the first RRC reconfiguration message contained in the nr-SCG field in the mrdc-SecondaryCellGroup field is received on SRB1, and the RRC message (e.g., the second RRC reconfiguration message) containing the first RRC reconfiguration message does not contain scg-State and the UE is in the MUSIM state, indicating, by the UE to the network MN and/or SN, information that the UE is in the MUSIM state or information that the SCG is not configured.

For case 3, if the UE configures the SCG but does not activate the SCG, the operation specifically includes: if the first RRC reconfiguration message is an RRC reconfiguration message received on SRB 1 and contained in the nr-SCG field in the mrdc-SecondaryCellGroup field and if the first RRC reconfiguration message contains secondaryCellGroup, then:
If the first RRC reconfiguration message is an RRC reconfiguration message received on SRB 1 and contained in the nr-SCG field in the mrdc-SecondaryCellGroup field, and the RRC message containing the first RRC reconfiguration message does not contain scg-State, and if the UE is not in the MUSIM state, configuring the SCG, and performing the operation of activating the SCG; and optionally, if the RRC message containing the first RRC reconfiguration message does not contain scg-State, but the UE is in the MUSIM state, configuring the SCG, and indicating, by the UE to network A (the MN and/or the SN), information that the UE is in the MUSIM state or information that the SCG is configured but not activated.

**Case 4 (the SN initiates an SCG change and the MN activates an SCG):** The UE receives, on SRB1, a first RRC reconfiguration message contained in the nr-SCG field in the mrdc-SecondaryCellGroup field, and an RRC message (e.g., a second RRC reconfiguration message) containing the first RRC reconfiguration message does not contain the scg-State field so as to indicate that the SCG is configured to be in the activated state. If the spCellConfig field in the nr-SCG field contains reconfigurationWithSync:
If the UE is not in the MUSIM state, random access is initiated on a PSCell.

If the UE is in the MUSIM state, the UE does not initiate random access until exiting the MUSIM state; or, if the UE is in the MUSIM state, the UE indicates, in a response message, that the UE is in the MUSIM state (in this case, the UE does not initiate random access on the PSCell). The response message may be an RRC reconfiguration complete message, and indication information that the UE is in the MUSIM state may be indicated only in a response message transmitted to the MN, or may be indicated only in a response message forwarded to the SN via the MN, or may be indicated in both the response message transmitted to the MN and the response message forwarded to the SN via the MN.

In the present disclosure, there may be a restriction that the MUSIM and a DAPS cannot be configured at the same time, or if the UE is in the MUSIM state, a DAPS handover cannot be configured.

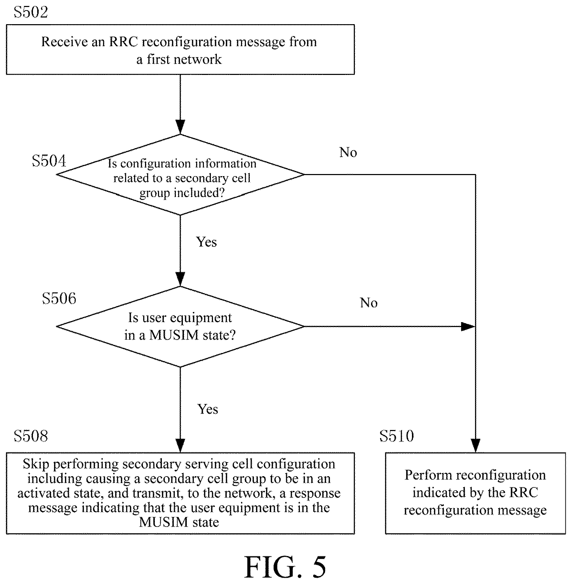

FIG. 5 is an exemplary flowchart for showing a reconfiguration with sync method performed by user equipment provided by a third implementation in the present specification.

As shown in FIG. 5, in S502, an RRC reconfiguration message is received from a first network.

Then, in S504, it is determined whether the received RRC reconfiguration message includes configuration information related to a secondary cell group.

The configuration information related to a secondary cell group may be, for example, configuration information for a secondary cell group change, and in this case, the RRC reconfiguration message may indicate that configuration is performed for a target secondary cell group. Here, the so-called secondary cell group change means that at least a primary second cell (PSCell) of the secondary cell group is changed, that is, changing from a current primary second cell to a target primary second cell different from the current primary second cell.

The configuration information related to the secondary cell group may also be, for example, configuration information for changing the secondary cell group in which the user equipment is currently located. In this case, the RRC reconfiguration message may indicate that the secondary cell group in which the user equipment is currently located is changed. Here, the change means changing a configurable parameter of the current secondary cell group, for example, configuring the secondary cell group to be in the activated state, and adding or releasing an SCell of the secondary cell group.

When it is determined in S504 that the RRC reconfiguration message includes the configuration information related to the secondary cell group, in S506, it is determined whether user equipment is in a MUSIM state.

If the user equipment is in the MUSIM state, in S508, secondary cell group configuration including causing the secondary cell group to be in the activated state is not performed, and a response message indicating that the user equipment is in the MUSIM state is transmitted to the network. The so-called not performing reconfiguration with sync including causing the secondary cell group to be in the activated state may be, for example, skipping performing the secondary cell group configuration indicated by the RRC reconfiguration message, or performing the secondary cell group configuration but skipping causing the secondary cell group to be in the activated state (even if the secondary cell group is in the inactive state).

If the RRC reconfiguration message does not include the configuration information related to the secondary cell group (no in S504) or the user equipment is not in the MUSIM state (no in S506), in S510, reconfiguration indicated by the RRC reconfiguration message is performed.

Specific embodiments of the third implementation will be described below.

### Handover (HO)

A related problem involved in receiving an RRC reconfiguration message from network A to instruct UE having at least dual Rx/Tx capabilities to perform a reconfiguration with sync procedure, the reconfiguration message containing an indication identifier of SCG activation when the UE is in the RRC connected state in both network A and network B, but the UE considers that the priority of network B is higher, so as to prevent the UE in the MUSIM state from activating the SCG and cause the state of the UE to be consistent with the state of the SCG in network A. In an embodiment of the present disclosure, when the UE performs reconfiguration with sync or a handover, a current MCG or SCG is referred to as a source MCG or a source SCG, and an MCG or SCG at which the reconfiguration with sync or handover is targeted is referred to as a target MCG or a target SCG.

An embodiment of an operation performed by the UE upon receiving, from the MN, an RRC reconfiguration message for a handover (i.e., the RRC reconfiguration message contains the masterCellGroup field, and the spCellConfig field contained in the masterCellGroup field contains the reconfigurationWithSync field, i.e., reconfiguration with sync of the MCG) will be described below.

In the present embodiment, the UE receives, from the MN, the RRC reconfiguration message for the handover, and if one of the following conditions A1 to A3 is satisfied, the UE performs reconfiguration with sync. See the latest version of TS38.331 for details.

Condition A1: the RRC reconfiguration message does not contain configuration information of the SCG (i.e., the RRC reconfiguration message does not contain the secondaryCellGroup field and the mrdc-SecondaryCellGroupConfig field).

Condition A2: the RRC reconfiguration message contains configuration information of the SCG (i.e., the RRC reconfiguration message contains the secondaryCellGroup field or the mrdc-SecondaryCellGroupConfig field), and the received RRC reconfiguration message contains the scg-State field.

Condition A3: the RRC reconfiguration message contains configuration information of the SCG (i.e., the RRC reconfiguration message contains the secondaryCellGroup field or the mrdc-SecondaryCellGroupConfig field), but the received RRC reconfiguration message does not contain the scg-State field, and the UE is not in the MUSIM state.

The UE receives, from network A (the MN), the RRC reconfiguration message for the handover, if the following condition B is satisfied:
Condition B: the RRC reconfiguration message contains configuration information of the SCG, but the received RRC reconfiguration message does not contain the scg-State field, and the UE is in the MUSIM state.

Then, in an implementation, the UE indicates, in a response message, related information that the UE is in the MUSIM state (in this case, the UE does not perform reconfiguration with sync, and the RRC reconfiguration procedure ends, and optionally, the UE resumes the original configuration). In another implementation, the UE performs MCG reconfiguration with sync and configures the SCG, but does not activate or configure the SCG, and indicates, in a response message, related information that the UE is in the MUSIM state or information indicating that the SCG is configured but not activated or information indicating that the SCG is not configured. The response message may be an RRC reconfiguration complete message RRCReconfigurationComplete.

### SCG Change

A related problem involved in receiving an RRC reconfiguration message from network A to instruct UE having at least dual Rx/Tx capabilities to perform an SCG change procedure when the UE is in the RRC connected state in both the first network (denoted as network A) and the second network (denoted as network B), but the UE is in the MUSIM state, so as to prevent the UE in the MUSIM state from activating the SCG and cause the state of the UE to be consistent with the state of the SCG in network A.

An embodiment of an operation performed by the UE upon receiving, from the MN, an RRC reconfiguration message for changing the SCG (i.e., the RRC reconfiguration message contains the secondaryCellGroup field or the mrdc-SecondaryCellGroupConfig field, and the spCellConfig field contained in the secondaryCellGroup field or the mrdc-SecondaryCellGroupConfig contains the reconfigurationWithSync field, i.e., reconfiguration with sync of the SCG) will be described in detail below.

In the present embodiment, the UE receives, from network A (the MN), the RRC reconfiguration message for changing the SCG, and if one of the following conditions C1 to C4 is satisfied, the UE performs SCG reconfiguration with sync (also referred to as the SCG change). See the latest version of TS38.331 for details .

Condition C1: the received RRC reconfiguration message contains the scg-State field.

Condition C2: the received RRC reconfiguration message does not contain the scg-State field, and the UE is not in the MUSIM state.

Condition C3: the RRC message containing the RRC reconfiguration message contains the scg-State field.

Condition C4: the RRC message containing the RRC reconfiguration message does not contain the scg-State field, and the UE is not in the MUSIM state.

The UE receives, from the MN, the RRC reconfiguration message for changing the SCG, if one of the following conditions D1 and D2 is satisfied:
Condition D1: the received RRC reconfiguration message does not contain the scg-State field, and the UE is in the MUSIM state.
Condition D2: the RRC message containing the RRC reconfiguration message does not contain the scg-State field, and the UE is in the MUSIM state.

In an implementation, the UE indicates, in a response message, related information that the UE is in the MUSIM state (in this case, the UE does not perform SCG reconfiguration with sync, and the RRC reconfiguration procedure ends, and optionally, the UE resumes the original configuration) or related information that the SCG reconfiguration with sync is not performed. In another implementation, the UE performs the SCG reconfiguration with sync according to the RRC reconfiguration message but considers that the SCG is deactivated, that is, executes the RRC reconfiguration message according to whether the RRC reconfiguration message contains the scg-State field but considers that the SCG is deactivated. The UE indicates, in a response message, related information that the UE is in the MUSIM state or related information that the SCG reconfiguration with sync is performed but the SCG is not activated. The response message may be an RRC reconfiguration complete message RRCReconfigurationComplete. Indication information that the UE is in the MUSIM state may be indicated only in a response message transmitted to the MN, or may be indicated only in a response message forwarded to the SN via the MN, or may be indicated in both the response message transmitted to the MN and the response message forwarded to the SN via the MN. In yet another implementation, the UE initiates an SCG failure information transmission procedure, and it is indicated in an SCG failure information message that the UE is in the MUSIM state.

In an embodiment of the present disclosure, the RRC message containing the RRC reconfiguration message may be an RRC reconfiguration message or an RRC resume message.

Provided in a fourth embodiment of the present specification is a conditional reconfiguration with sync method performed by user equipment, including: when user equipment is in a MUSIM state, even if the user equipment is configured to be required to perform conditional reconfiguration, skipping performing the conditional reconfiguration; and when the user equipment is not in the MUSIM state and the user equipment is configured to be required to perform conditional reconfiguration, and an evaluation result after performing condition evaluation of the conditional reconfiguration is that a reconfiguration condition is satisfied, performing the conditional reconfiguration.

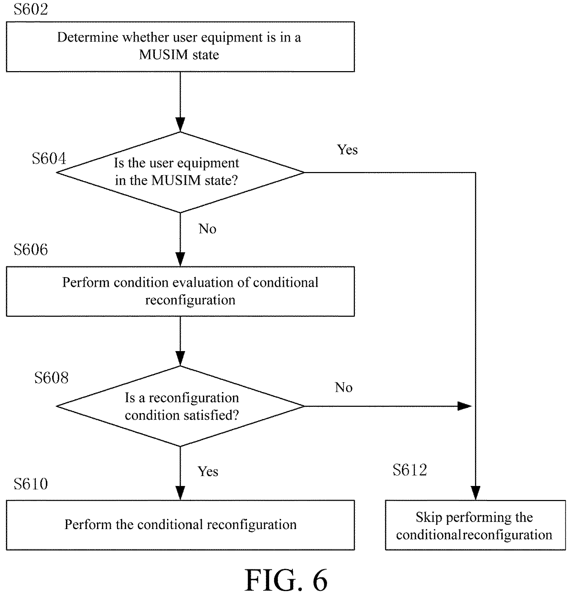

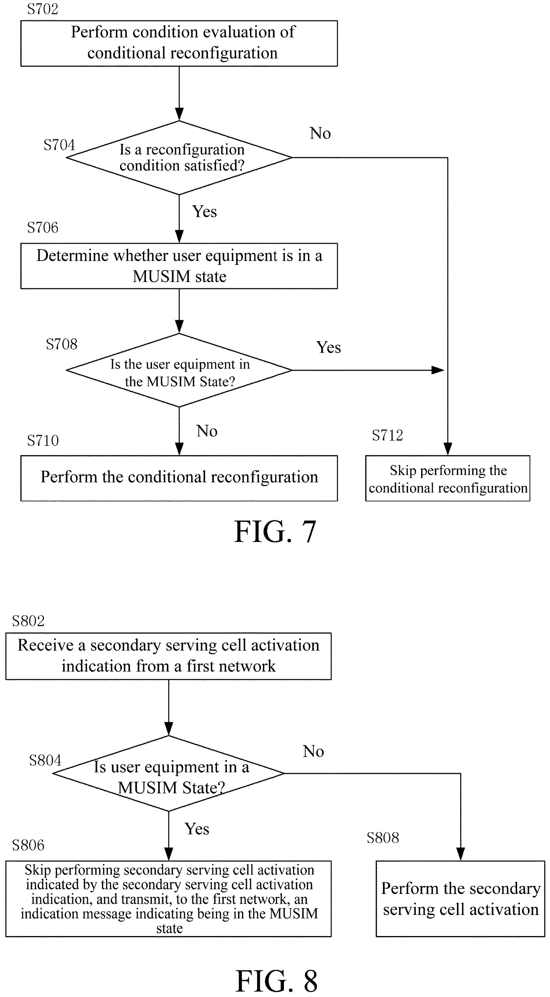

A specific example of the fourth embodiment will be described below with reference to FIG. 6 and FIG. 7.

FIG. 6 is an exemplary flowchart for showing a reconfiguration with sync method performed by user equipment provided by a fourth implementation in the present specification.

As shown in FIG. 6, in S602 to S604, it is determined whether user equipment is in a MUSIM state.

When the user equipment is not in the MUSIM state, in S606, evaluation of conditional reconfiguration is performed. In S608, it is determined whether an evaluation result is that a reconfiguration condition is satisfied.

When the evaluation result is that the reconfiguration condition is satisfied, in S610, the conditional reconfiguration is performed.

When the user equipment is in the MUSIM state (yes in S604) or the reconfiguration condition is not satisfied (no in S608), in S612, the conditional reconfiguration is not performed. Thus, an SCG is prevented from being activated after conditional reconfiguration is performed.

FIG. 7 is another exemplary flowchart for showing a reconfiguration with sync method performed by user equipment provided by the fourth implementation in the present specification.

As shown in FIG. 7, in S702, when user equipment is configured to be required to perform conditional reconfiguration, evaluation of the conditional reconfiguration is performed. In S704, it is determined whether an evaluation result of the conditional reconfiguration is that a reconfiguration condition is satisfied.

When the evaluation result of the conditional reconfiguration is that the reconfiguration condition is satisfied, in S708, it is determined whether the user equipment is in a MUSIM state.

If the user equipment is in the MUSIM state, in S712, the conditional reconfiguration is not performed. Thus, an SCG is prevented from being activated after conditional reconfiguration is performed. If the user equipment is not in the MUSIM state, in S710, the conditional reconfiguration is performed.

Further, when the reconfiguration condition is not satisfied, the conditional reconfiguration is not performed.

In the present implementation, when the user equipment is instructed to perform the conditional reconfiguration and the user equipment is in the MUSIM state, a message indicating that the user equipment is in the MUSIM state may be transmitted to the network.

In the case that the user equipment is configured by the first network so as to be allowed to use only part of the hardware capabilities of the user equipment to communicate with the first network, if it is determined that the user equipment is in the MUSIM state, the conditional reconfiguration corresponding to conditional reconfiguration information is not performed even if the user equipment is configured to be required to perform the conditional reconfiguration. This is to prevent a secondary cell group from being activated after conditional reconfiguration is performed.

Specific embodiments of the fourth implementation will be described below.

### Conditional Reconfiguration with Sync/Conditional PSCell Addition/Conditional SCG Change (CHO/CPA/CPC)

A related problem involved in UE having at least dual Rx/Tx capabilities being configured with CHO or CPA or CPC, when a condition of the CHO or CPA or CPC is satisfied when the UE is in the RRC connected state in both the first network (denoted as network A) and the second network (denoted as network B), but the UE is in the MUSIM state, so as to prevent the UE in the MUSIM state from activating the SCG and cause the state of the UE to be consistent with the state of the SCG in network A. The conditional reconfiguration in the following embodiments includes: CHO, CPA, and CPC.

In one embodiment, when the UE is in the MUSIM state or is configured to enter (or to be in) the MUSIM state by network A, the UE stops evaluation of the conditional reconfiguration. In other words, when the UE is in the MUSIM state or is configured to enter (or to be in) the MUSIM state by network A, if the conditional reconfiguration is configured, the UE stops evaluation of the conditional reconfiguration. This is because if the UE performs the evaluation of the conditional reconfiguration, when the UE detects that the condition is satisfied, CHO or CPA needs to be performed, but both CHO and CPA may activate the SCG. When the UE exits the MUSIM state (or the UE is not in the MUSIM state or transmits, to network A, a request to exit the MUSIM state), if the conditional reconfiguration is configured, the UE initiates evaluation of the conditional reconfiguration. Optionally, the evaluation of the conditional reconfiguration of the CHO is stopped only when the RRC reconfiguration message for performing the CHO contains the configuration information of the SCG but does not contain scg-State.

In one embodiment, if the UE is configured with the conditional reconfiguration and the evaluation condition of the conditional reconfiguration is satisfied, and if the UE is not in the MUSIM state, a conditional reconfiguration execution procedure is initiated. If the UE is configured with the conditional reconfiguration and the evaluation condition of the conditional reconfiguration is satisfied, and if the UE is in the MUSIM state, the UE indicates, to network A, related information that the UE is in the MUSIM state or that the UE performs the conditional reconfiguration when the UE exits the MUSIM state. Specifically, the evaluation condition of the conditional reconfiguration being satisfied means that, for each condReconfigID in the variable VarConditionalReconfig, events associated with all measIds in condTriggerConfig of a target candidate cell in stored condRRCReconfig are satisfied. Optionally, when the evaluation condition of the CHO is satisfied, the conditional reconfiguration is performed when the UE exits the MUSIM state, or related information that the UE is in the MUSIM state is indicated to network A only if the RRC reconfiguration message for performing the CHO contains the configuration information of the SCG.

A fifth implementation will be described below with reference to FIG. 8 to FIG. 10.

FIG. 8 is an exemplary flowchart for showing a secondary serving cell configuration method performed by user equipment provided by the fifth implementation in the present specification.

As shown in FIG. 8, in S802,a secondary serving cell activation indication is received from a first network.

Upon receiving the secondary serving cell activation indication from the first network, in S804, it is determined whether user equipment is in a MUSIM state. Here, data may be transmitted between a secondary serving cell indicated by the secondary serving cell activation indication and another secondary serving cell or a special serving cell in the activated state in which the user equipment is located in the first network via inter-frequency carrier aggregation.

When the user equipment is in the MUSIM state, in S806, secondary serving cell activation indicated by the secondary serving cell activation indication is not performed, and an indication message indicating that the user equipment is in the MUSIM state is transmitted to the first network.

When the user equipment is not in the MUSIM state, in S808, the secondary serving cell activation indicated by the secondary serving cell activation indication is performed.

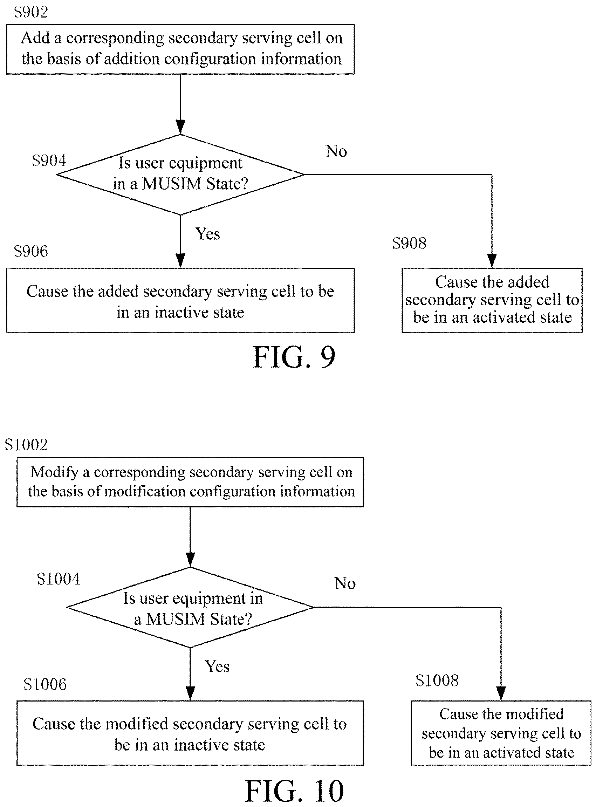

The secondary serving cell activation indication may be contained in an RRC reconfiguration message, and the RRC reconfiguration message may include addition configuration information for adding a secondary serving cell. In this case, a secondary serving cell may be added with reference to the procedure in FIG. 9.

As shown in FIG. 9, in S902, a corresponding secondary serving cell is added on the basis of addition configuration information.

In S904, it is determined whether user equipment is in a MUSIM state.

When the user equipment is in the MUSIM state, in S906, the added secondary serving cell is caused to be in an inactive state. When the user equipment is not in the MUSIM state, in S908, the added secondary serving cell is caused to be in an activated state.

The RRC reconfiguration message may further include modification configuration information for modifying a secondary serving cell. In this case, a secondary serving cell may be modified with reference to the procedure in FIG. 10.

As shown in FIG. 10, in S 1002, a corresponding secondary serving cell is modified on the basis of modification configuration information. In S 1004, it is determined whether user equipment is in a MUSIM state.

When the user equipment is in the MUSIM state, in S1006, the modified secondary serving cell is caused to be in an inactive state. When the user equipment is not in the MUSIM state, in S1008, the modified secondary serving cell is caused to be in an activated state.

In one example, when currently available resources of the user equipment are sufficient to perform the secondary serving cell activation indicated by the secondary serving cell activation indication, the secondary serving cell activation may be performed regardless of whether the user equipment is in the MUSIM mode.

Further, in one example, in the case that the user equipment is configured by the first network so as to be allowed to use part of the hardware capabilities of the user equipment to communicate with the first network, the operation of determining whether the user equipment is in the MUSIM state is performed. In the case that the user equipment is configured by the first network so as to be allowed to use only part of the hardware capabilities of the user equipment to communicate with the first network or in the case that the first network is not configured so as to be allowed to use only part of the hardware capabilities of the user equipment to communicate with the first network, when the secondary serving cell activation indication from the first network is received, the secondary serving cell activation corresponding to the secondary serving cell activation indication is performed.

Specific embodiments of the fifth implementation will be described below.

### The following considers SCell configuration and activation scenarios in the case of carrier aggregation (CA)

A related problem involved in UE having at least dual Rx/Tx capabilities receiving an SCell activation indication from network A when the UE is in the RRC connected state in both the first network (denoted as network A) and the second network (denoted as network B), but the UE in the MUSIM state, so as to prevent the UE in the MUSIM state from activating the SCell and cause the state of the UE to be consistent with the state of the SCell in the network.

UE operating in carrier aggregation receives an SCell activation indication from a network, and if the UE is not in the MUSIM state, the UE configures a lower layer to consider that the SCell is in the activated state or activate the SCell. If the UE is in the MUSIM state, the UE transmits indication information to the network to indicate information that the UE is in the MUSIM state or that the SCell is not activated (the indication information may contain specific cell identification information). In this case, the UE does not activate the SCell. It should be noted that in the scenario considered here, the SCell the activation of which is indicated by the network and the SCell currently in the activated state or the PSCell in the UE use inter-frequency carrier aggregation. In other words, the UE capabilities or resources of the UE currently in the MUSIM state cannot support activation of the SCell(s), or even if the SCells are activated, data cannot be received from or transmitted to the SCells due to the UE capabilities being restricted.

The SCell activation indication may be the sCellState field contained in the RRC reconfiguration message, or may be an SCell activation/deactivation medium access control (MAC) control element (CE) or an enhanced SCell activation/deactivation MAC CE.

The UE receives an RRC reconfiguration message from a base station, and the RRC reconfiguration message contains the CellGroupConfig field (the field may be contained in the masterCellGroup field). On the basis of the received CellGroupConfig field, the UE performs the following operation:
If the CellGroupConfig field contains the sCellToAddModList field, performing SCell addition or modification. The SCell addition or modification includes the following operation: For each sCellIndex value (this is for the case of SCell addition) that is contained in sCellToAddModList but is not part of current UE configurations, performing at least one of the following operations:
(1) Adding an SCell corresponding to sCellIndex according to sCellConfigCommon and sCellConfigDedicated.
(2) If sCellState is contained (i.e., the SCell is configured to be in the activated state), and the UE is not in the MUSIM state, configuring the lower layer is to consider that the SCell is in the activated state. If sCellState is contained but the UE is in the MUSIM state, or sCellState is not contained (i.e., the SCell is configured to be in the inactive state), the lower layer is configured to consider that the SCell is in the inactive state.

For each sCellIndex value that is contained in sCellToAddModList and is part of current UE configurations (this is for the case of SCell modification), at least one of the following operations is performed:
(1) Modifying an SCG configuration according to sCellConfigDedicated.
(2) If sCellToAddModList is received from an RRC reconfiguration message containing reconfiguration With Sync, or is received from an RRC reconfiguration message containing reconfigurationWithSync and contained in another RRC reconfiguration message:
   If the RRC reconfiguration message contains sCellState and the UE is not in the MUSIM state, configuring the lower layer to consider that the SCell is in the activated state.
   If the RRC reconfiguration message contains sCellState but the UE is in the MUSIM state, or the RRC reconfiguration message does not contain sCellState, the lower layer is configured to consider that the SCell is in the inactive state.

The UE indicates, in a response message, related information that the UE is in the MUSIM state or related information that the SCell is not activated (optionally, this operation is performed only when the SCell is configured to be in a non-activated state but the UE is in the MUSIM state). The response message may be an RRC reconfiguration complete message RRCReconfigurationComplete.

In one embodiment, if the UE receives, from the network, an RRC message for configuring and activating an SCell inter-frequency with the PSCell, the UE does not configure the SCell, and transmits, to the network, indication information that the UE is in the MUSIM state or indication information that the SCell is configured. Optionally, the indication information contains the identity of the SCell that is not configured. In other words, if the UE receives, from the network, an RRC message for configuring (or activating) an SCell that is an intra-frequency cell to the PSCell, the UE configures (or activates) the SCell.

### A scenario in which UE receives from a base station an SCell activation/deactivation MAC CE or an enhanced SCell activation/deactivation MAC CE in carrier aggregation will be considered below.

For each configured SCell, a MAC entity performs the following operations:
If the SCell is configured to be in the activated state during SCell configuration, that is, the SCell is configured with sCellState of which the value is set to "activated" (i.e., the value for indicating SCell activation), or an SCell activation/deactivation MAC CE or an enhanced SCell activation/deactivation MAC CE is received to activate the SCell, performing the following operations:
(1) If the UE is not in the MUSIM state, further, when it is satisfied that (A) if the SCell is deactivated before an SCell activation/deactivation MAC CE or an enhanced SCell activation/deactivation MAC CE is received, or that (B) if sCellState that the SCell is configured with is set to "activated" during SCell configuration, performing at least one of the following operations:
   (a) If firstActiveDownlinkBWP-Id is not set to a dormant BWP, activating the SCell; otherwise, stopping bwp-InactivityTimer of the present serving cell; and
   (b) activating a downlink bandwidth part (BWP) and an uplink BWP indicated by firstActiveDownlinkBWP-Id and firstActiveUplinkBWP-Id.
(2) Otherwise (i.e., the UE is in the MUSIM state), indicating to the network information that the UE is in the MUSIM state or related information that the SCell is not activated, and in this case, the SCell is not activated. Specifically, a MAC CE may be defined or an existing MAC CE may be reused, and the MAC CE carries the information for indicating that the UE is in the MUSIM state or the related information for indicating that the SCell is not activated.

In the present disclosure, deactivated and inactive have the same meaning, and may be used interchangeably.

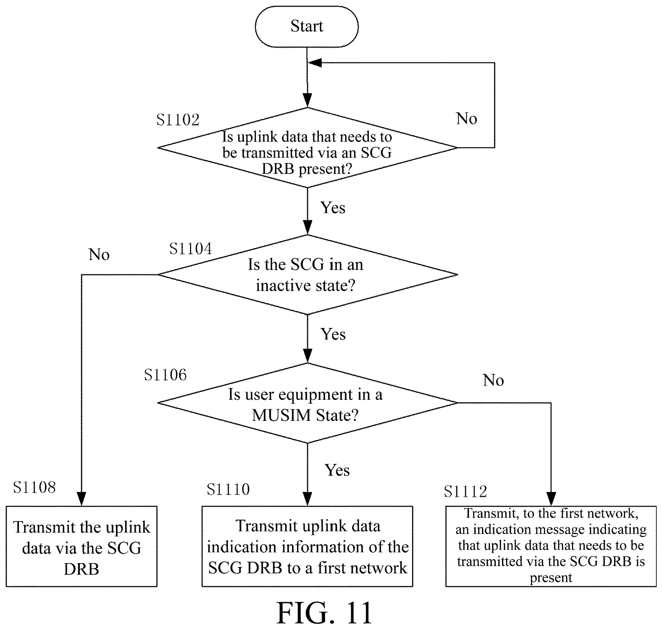

FIG. 11 is an exemplary flowchart for showing a method performed by user equipment provided by a sixth implementation in the present specification.

As shown in FIG. 11, in S1102, it is determined whether uplink data that needs to be transmitted via an SCG DRB is present in a first network.

When user equipment has uplink data that needs to be transmitted via an SCG DRB in the first network, it is determined whether a predetermined condition is satisfied. That is, in S1104, it is determined whether a secondary cell group corresponding to the SCG DRB is in an inactive state. If the secondary cell group is in the inactive state, in S1106, it is determined whether user equipment is in a MUSIM state.

If the above predetermined condition is satisfied, in S1110, uplink data indication information of the SCG DRB is transmitted to the first network, the uplink data indication information being used to indicate, to the first network, that uplink data related to the SCG DRB has arrived. "Has arrived" here is with respect to a transceiver module of the user equipment (e.g., an RRC entity of the user equipment related to this RRC connection determines that there is uplink data related to the SCG DRB to transmit). Upon receiving the uplink data indication information, the first network may configure corresponding MCG resources for the first network so as to use the same to transmit the uplink data.

If the SCG is in the activated state (determined as no in S1104), in S1108, the uplink data is transferred via the SCG in the activated state.

When the secondary cell group corresponding to the SCG DRB is in the inactive state but the user equipment is not in the MUSIM state, that is, when it is determined as yes in S1104 but it is determined as no in S1106, in S1112, an indication message indicating that uplink data that needs to be transmitted via the SCG DRB is present is transmitted to the first network, the indication message being used to indicate that UE has uplink data related to the SCG in the deactivated state. Upon receiving the indication message, the first network may configure an activated SCG for the user equipment, so as to use the same to transmit the uplink data.

The uplink data indication information may include, for example, identification information of an SCG DRB related to the uplink data or a logical channel identity of an SCG RLC entity.

In one example, in addition to the conditions shown in S1104 and S1106, the predetermined conditions may further include any one of the following: the user equipment has not transmitted to the network uplink data indication information related to the uplink data; after the user equipment entered the current MUSIM state, no uplink data indication information related to the uplink data has been transmitted to the network; and a prohibit timer for prohibiting transmission of the uplink data indication information is not in a running state, and the prohibit timer is started when the uplink data indication information is transmitted. The prohibit timer is used to restrict the frequency of transmitting the uplink data indication information so as to prevent overly frequent information transmission.

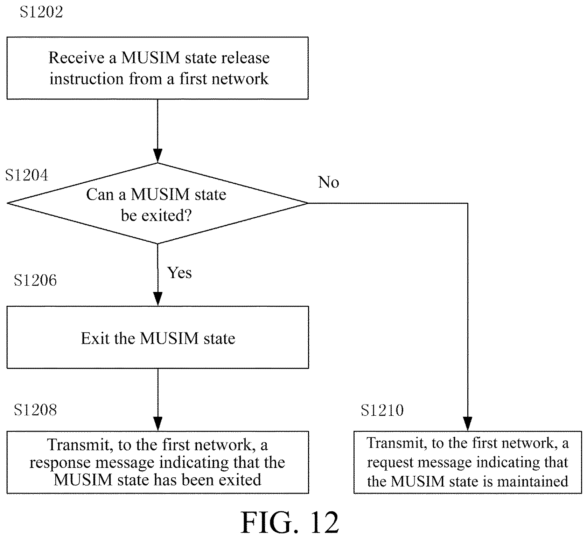

In one example, the first network may instruct, via a MUSIM state release instruction, the user equipment to exit the MUSIM state. Upon receiving the MUSIM state release instruction, the user equipment may determine, according to preference thereof, whether to exit the MUSIM state. Description is provided below with reference to FIG. 12.

FIG. 12 is an exemplary flowchart for showing a MUSIM release instruction processing procedure in a method performed by user equipment provided by a sixth implementation in the present specification.

In S1202, a MUSIM state release instruction is received from a first network.

Upon reception of the MUSIM state release instruction, in S1204, it is determined whether a MUSIM state can be exited. In other words, in S1204, it is determined whether current user equipment prefers to exit the MUSIM state.

If it is determined as yes in S1204, in S1206, the MUSIM state is exited in response to the MUSIM state release instruction, so that a corresponding secondary cell group can be activated in the first network. Then, in S1208, a response message indicating that the MUSIM state has been exited is transmitted to the first network.

When the user equipment determines that the MUSIM state cannot be exited (no in S1204), in S1210, a request message indicating that the MUSIM state is maintained is transmitted to the first network. The request message may include information indicating that the user equipment is still in the MUSIM state. For example, when the user equipment considers that there is data that is more urgent and needs to be transmitted in a second network different from the first network or considers that the priority of data transmitted in the second network is higher, it may be determined that it is currently preferred not to exit the MUSIM state.

Further, in one example, if whether the user equipment is allowed to use part of the hardware capabilities thereof to communicate with the first network is configured by the first network, in the case that the user equipment is configured by the first network so as to be allowed to use part of the hardware capabilities of the user equipment to communicate with the first network, the predetermined condition includes that the user equipment is in the MUSIM state. In the case that the user equipment is configured by the first network so as not to be allowed to use only part of the hardware capabilities of the user equipment to communicate with the first network or is not configured by the first network so as to be allowed to use only part of the hardware capabilities of the user equipment to communicate with the first network, if the user equipment prefers to maintain the RRC connection with the second network, the RRC connection with the first network is released.

Specific embodiments of the sixth implementation will be described in detail below.

### A scenario in which uplink data of an SCG DRB arrives but UE is in the MUSIM state will be described below.

The UE in the MUSIM state is in a dual connected state in network A, and the SCG is deactivated. When uplink data related to a data radio bearer (DRB) without an MCG RLC bearer arrives at the UE, and the UE has not transmitted an indication to the network related to the arrival of the uplink data of the DRB (the condition may be replaced with: after the UE has most recently entered the MUSIM state or the UE has most recently changed the MUSIM state, no indication has been transmitted to the network related to the arrival of the uplink data of the DRB, or the UE has not previously transmitted an indication to the network related to the arrival of the uplink data of the DRB), if the prohibit timer is not running (this condition is optional), the UE indicates, to network A, the arrival of the uplink data related to the DRB, and the indication may contain a DRB identity of the DRB or a corresponding logical channel identity. Optionally, the prohibit timer is started.

Specifically, if the SCG is deactivated and the UE has uplink data that needs to be transmitted related to an SCG RLC entity but the UE has not previously had uplink data that needed to be transmitted related to the SCG RLC entity (the condition may be replaced with: after the UE has most recently entered the MUSIM state or the UE has most recently changed the MUSIM state, no indication has been transmitted to the network related to the arrival of the uplink data of the SCG RLC entity, or the UE has not previously transmitted an indication to the network related to the arrival of the uplink data of the SCG RLC entity), and the prohibit timer is not running (this condition is optional), transmission of a UE assistance information message is initiated to indicate that the UE has uplink data, that needs to be transmitted, of the DRB related to a DRB identity (DRB-Identity) not contained in any RLC-BearerConfig in CellGroupConfig associated with an MCG. Optionally, the prohibit timer is started.

A UE assistance information message transmission procedure will be described below:
If UE assistance information message transmission is initiated in order to provide the UE with an indication related to uplink data of the inactive SCG, and further, if the UE is in the MUSIM state, the UE assistance information message contains an identity of an SCG DRB that has uplink data that needs to be transmitted or a logical channel identity of an SCG RLC entity that has uplink data that needs to be transmitted; otherwise (the UE is not in the MUSIM state), the UE assistance information message contains the uplinkData field for indicating that the UE has uplink data, that needs to be transmitted, related to the SCG RLC entity or the SCG in the deactivated state.

When the SCG is deactivated and the UE is not in the MUSIM state, the UE only needs to include, in the UE assistance information message, the uplinkData field for indicating that the UE has uplink data that needs to be transmitted related to the SCG RLC entity. Upon receiving this message, the network may activate the SCG. However, when the SCG is deactivated and the UE is in the MUSIM state, the UE needs to include, in the UE assistance information message, an SCG DRB identity or a corresponding logical channel identity for indicating that the UE has uplink data that needs to be transmitted related to the SCG RLC entity. Upon receiving this message, the network may reconfigure the SCG DRB into an MCG DRB or split DRB (i.e., add an MCG RLC bearer for the SCG DRB), thereby reducing a transmission delay of the SCG DRB.

In the present disclosure, a data radio bearer (DRB) without an MCG RLC bearer refers to an SCG DRB or SCG RLC entity, i.e., a DRB of which an associated RLC bearer is only in the SCG, i.e., a DRB configured with only an SCG RLC bearer, i.e., a DRB of which DRB-Identity is not contained in any RLC-BearerConfig in CellGroupConfig associated with an MCG. These expressions may be used interchangeably. In addition, in the embodiments of the present disclosure, the operation of starting the prohibit timer and the operation of UE initiating the UE assistance information message to indicate the arrival of the uplink data of the DRB are interchangeable. The RLC bearer and the RLC entity may be used interchangeably.

### A scenario in which downlink data of an SCG DRB arrives but UE is in the MUSIM state will be considered below.

When the UE is in the MUSIM state, if network A needs to perform a high priority service or an urgent service in the SCG, for example, downlink data related to the SCG DRB arrives in network A, network A needs to indicate related information to the UE, so that the UE can determine, according to the indication information, whether to release an RRC connection with another network or release a UE capability restriction in network A.

Specifically, the UE receives an RRC message from the network, for example, an RRC reconfiguration message, which includes a field for instructing the UE to exit the MUSIM state or instructing the UE to release the UE capability restriction in network A. The UE may indicate, in a response message, that the UE exits or maintains the MUSIM state or that the UE releases or maintains (or requests) the capability restriction in network A. The response message may be an RRC reconfiguration complete message or a UE assistance information message.

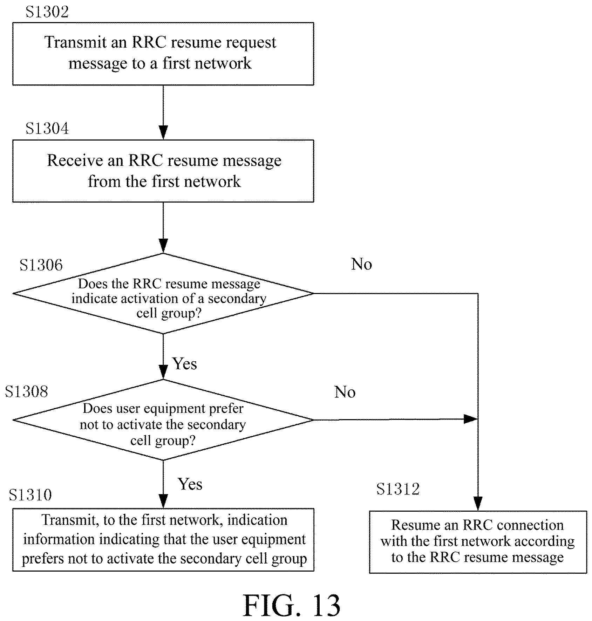

FIG. 13 is an exemplary flowchart for showing an RRC connection resumption method performed by user equipment provided by a seventh implementation in the present specification.

In S 1302, an RRC resume request message requesting resumption of an RRC connection with a first network is transmitted to the first network.

Then, in S1304, an RRC resume message is received from the first network.

Then, in S 1306, it is determined whether the received RRC resume message indicates activation of a secondary cell group.

When the RRC resume message indicates activation of a secondary cell group, in S 1308, it is determined whether a user prefers not to activate the secondary cell group.

If the user equipment prefers not to activate the secondary cell group, in S1310, indication information indicating that the user equipment prefers not to activate the secondary cell group is transmitted to the first network. In one example, the indication information further includes information indicating any one of the following: a new secondary cell group indicated by the RRC resume message is not configured; a new secondary cell group indicated by the RRC resume message is configured, but is not activated; an existing secondary cell group indicated by the RRC resume message is not resumed; and an existing secondary serving cell indicated by the RRC resume message is resumed, but is not activated.

If the RRC resume message does not indicate activation of a secondary cell group, or the RRC resume message indicates activation of a secondary cell group but the user equipment does not prefer not to activate the secondary cell group, in S 1312, the RRC connection with the first network is resumed according to the received RRC resume message.

In one example, if the user equipment prefers not to activate the secondary cell group, any one of the following may be performed: when the RRC resume message indicates configuration of a new secondary cell group, configuring the new secondary serving cell according to the RRC resume message, but skipping activating the new secondary cell group; when the RRC resume message indicates configuration of a new secondary cell group, skipping performing configuration of the new secondary cell group indicated by the RRC resume message; when the RRC resume message indicates resumption of an existing secondary cell group, skipping performing resumption of the existing secondary cell group indicated by the RRC resume message; and when the RRC resume message indicates resumption of an existing secondary cell group, resuming the existing secondary cell group indicated by the RRC resume message, but skipping activating the existing secondary cell group.

In one example, in the case that data is transmitted via inter-frequency carrier aggregation between a secondary serving cell indicated by the RRC resume message and another secondary serving cell in an activated state or a primary serving cell (PCell) in which the user equipment is located in the first network, when the secondary serving cell the activation of which is indicated by the RRC resume message and the primary serving cell operate in different frequency bands, if the user equipment prefers not to activate the secondary serving cell, indication information indicating that the user equipment prefers not to activate the secondary serving cell is transmitted to the first network.

In one example, if whether part of the hardware capabilities of the user equipment are allowed to be used to communicate with the first network is configured by the first network, in the case that the user equipment is configured by the first network so as to be allowed to use only part of the hardware capabilities of the user equipment to communicate with the first network, when the RRC resume message indicates activation of a secondary cell group, if the user equipment prefers not to activate the secondary cell group, indication information indicating that the user equipment prefers not to activate the secondary cell group may be transmitted to the first network.

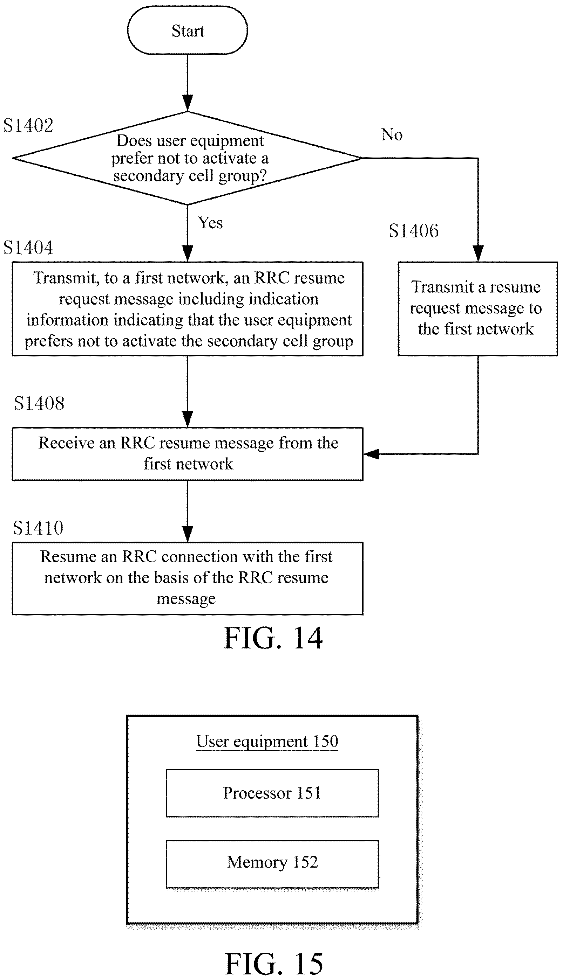

FIG. 14 is an exemplary flowchart for showing an RRC connection resumption method performed by user equipment provided by an eighth implementation in the present specification.

As shown in FIG. 14, it is determined whether a user prefers not to activate a secondary cell group.

If the user equipment prefers not to activate the secondary cell group, in S 1404, an RRC resume request message requesting resumption of an RRC connection in a first network is transmitted to the first network, the RRC resume request message including indication information indicating that the user equipment prefers not to activate the secondary cell group. Otherwise, if the user equipment does not prefer not to activate the secondary cell group, in S 1406, an RRC resume request message not including the indication information is transmitted. As an example, the case that the user equipment prefers not to activate the secondary cell group may include the user equipment being in a MUSIM state.

In one example, if whether part of the hardware capabilities of the user equipment are allowed to be used to communicate with the first network is configured by the first network, in the case that the user equipment is configured by the first network so as to be allowed to use only part of the hardware capabilities of the user equipment to communicate with the first network, if the user equipment prefers not to activate the secondary cell group, an RRC resume request message including indication information indicating that the user equipment prefers not to activate the secondary cell group may be transmitted to the first network.

Then, in S1408, an RRC resume message is received from the first network.

In S1410, the RRC connection with the first network is resumed on the basis of the RRC resume message.

In one example, if it is determined, according to context information stored by the user equipment, that a secondary cell group needs to be activated upon entering an RRC connected state in the first network, but the user equipment does not prefer to activate the secondary cell group, indication information indicating that the user equipment does not prefer to activate the secondary cell group is included in the RRC resume request message. This is to prevent the first network from being configured to activate the secondary cell group when providing the user equipment with a configuration for resuming the RRC connection.

In the case that the RRC resume request message requesting resumption of the RRC connection in the first network is transmitted to the first network, if it is determined that the user equipment is in a dual connected state in the first network, configuration information related to the dual connected state is released.

Specific embodiments of the seventh and eighth implementations will be described in detail below.

### A scenario in which the UE in the MUSIM state requests resumption of the RRC connection in network A will be considered below.

The UE is in an RRC inactive state (i.e., an RRC connection is suspended) in network A, and is in an RRC connected state in network B. The UE transmits an RRC resume request RRCResumeRequest message to network A to request resumption of the RRC connection in network A. Upon receiving the resume request message, network A may transmit an RRC resume message to the UE to resume the suspended RRC connection. In the RRC resume message, whether to activate an SCG may be indicated. If the RRC resume message indicates activation of the SCG, since the UE is in the MUSIM state, if the UE considers that the priority of network B is higher, the RRC connection with network B is not released, resulting in the UE being unable to communicate with the SCG in network A. However, network A considers that the SCG is activated and performs data transmission on the SCG, but in this case, the UE is incapable of receiving data transmitted on the SCG, which results in waste of resources of network A.

The following provides embodiments to solve the problem.

In one embodiment, if the UE is in the MUSIM state or the UE prefers not to activate the SCG (or prefers that the SCG is in the inactive state), indication information is included in the RRC resume request message to indicate that the UE is in the MUSIM state or the UE prefers not to activate the SCG or prefers that the SCG is in the inactive state.

Specifically, the UE sets contents of the RRC resume request message as follows: if the UE is in the MUSIM state, the RRC resume request message contains indication information for indicating that the UE is in the MUSIM state or contains indication information of whether it is preferable to activate the SCG. Specifically, a new field may be defined for indicating indication information that the UE is in the MUSIM state or prefers not to activate the SCG or prefers that the SCG is in the inactive state. If the UE is in the MUSIM state or the UE prefers not to activate the SCG or prefers that the SCG is in the inactive state, the RRC resume request message contains the field, otherwise, the RRC resume request message does not contain the field. Optionally, only when the SCG is in the activated state or the SCG is in the activated state before the UE enters the RRC inactive state in a context stored by the UE, the UE includes, in the RRC resume request message, indication information that the UE is in the MUSIM state or that the UE prefers not to activate the SCG or prefers that the SCG is in the inactive state.

The UE submits, to a lower layer, the RRC resume request message to be transmitted.

It should be noted that, when the embodiment is applied to a carrier aggregation scenario, the indication information is used to indicate that the UE is in the MUSIM state, or that the UE prefers not to activate the SCell, or that the UE prefers not to activate the SCell inter-frequency with the PCell. Optionally, the RRC resume request message contains the indication information only when the SCell inter-frequency with the PCell is present in the configured SCell.

As a variant of the above embodiment, the RRC resume request message contains the indication information only when the UE prefers to activate the SCG or prefers that the SCG is in the activated state, the indication information being used to indicate that the UE prefers to activate the SCG or prefers that the SCG is in the activated state.

In one embodiment, if the UE receives an RRC resume RRCResume message from a base station, the message does not contain the indication scg-State that configures the SCG to be in the inactive state. If the UE is in the MUSIM state, the UE does not activate the SCG. Optionally, the UE transmits indication information to the network to indicate that the UE is in the MUSIM state or the SCG is not activated or the SCG is not configured. The indication information may be contained in an RRC resumption complete message.

It should be noted that, in the present embodiment, if the UE is in the MUSIM state, the UE may configure or resume the SCG according to the received RRC resume message, or may not configure or resume the SCG. Specifically, if the RRC resume message contains restoreSCG and the UE is not in the MUSIM state, the UE restores mrdc-SecondaryCellGroup from the UE inactive AS context. In other words, if the RRC resume message contains restoreSCG and the UE is in the MUSIM state, or the RRC resume message does not contain restoreSCG, an MR-DC-related configuration is released from the UE inactive AS context.

The restoreSCG field is used to instruct the UE to restore the SCG configuration from the UE inactive AS context.

In one embodiment, the UE transmits an RRC resume request message to network A, and receives an RRC resume message from the network. If the UE has the MUSIM capability or the UE is a UE configured with multi-SIM (the UE has reported the multi-SIM capability thereof to the network), the SCG is configured in the RRC resume message to be in the inactive state, that is, the RRC resume message contains the scg-State field. In other words, for the UE configured with the MUSIM, during RRC connection resumption, only the SCG in the inactive state can be configured, or the SCG is not configured.

In one embodiment, when the UE initiates an RRC connection resumption procedure, if the UE is in NR-DC, and the UE is in the MUSIM state, the MR-DC-related configuration is released from the UE inactive AS context.

In one embodiment, if the UE receives an RRC resume message from a base station, and the message contains the indication sCellState for configuring the SCell inter-frequency with the PCell to be in the activated state, and if the UE is in the MUSIM state, the UE does not activate the SCell, or the UE configures but does not activate the SCell, or the UE does not configure the SCell. Optionally, the UE transmits indication information to the network to indicate that the UE is in the MUSIM state or the SCell is not activated or the SCell is not configured or the SCell is configured but is not activated. The indication information may be the identity of the SCell that is not activated or not configured, and the indication information may be contained in an RRC resumption complete message.

In an embodiment of the present disclosure, releasing the MR-DC-related configuration from the UE inactive AS context includes: releasing SRB3 (for the case that SRB3 has been established), releasing measConfig associated with the SCG, releasing the SCG configuration, etc.

FIG. 15 is a block diagram of user equipment provided in the present specification. As shown in FIG. 15, the user equipment (UE) 40 includes a processor 151 and a memory 152. The processor 151 may include, for example, a microprocessor, a microcontroller, an embedded processor, and the like. The memory 42 may include, for example, a volatile memory (such as a random access memory (RAM)), a hard disk drive (HDD), a non-volatile memory (such as a flash memory), or other memories, etc. The memory 152 has program instructions stored thereon. The instructions, when run by the processor 151, can perform the above method executed by the user equipment described in detail in the present invention.

In the embodiments of the present disclosure, if whether a plurality of conditions are satisfied needs to be determined before one or more certain operations are performed, embodiments obtained by changing the execution order of the determination conditions also fall within the scope of protection of the present disclosure.

The program running on the device according to the present invention may be a program that enables a computer to implement the functions of the embodiments of the present invention by controlling a central processing unit (CPU). The program or information processed by the program may be temporarily stored in a volatile memory (for example, a random access memory (RAM)), a hard disk drive (HDD), a non-volatile memory (for example, a flash memory), or other memory systems.

The computer-executable instructions or program for implementing the functions of the embodiments of the present disclosure may be recorded on a computer-readable storage medium. The corresponding functions may be achieved by reading programs recorded on the recording medium and executing the programs by a computer system. The phrase "computer system" herein may be a computer system embedded in the device, which may include operating systems or hardware (e.g., peripherals). The "computer-readable storage medium" may be a semiconductor recording medium, an optical recording medium, a magnetic recording medium, a short-time dynamic memory program recording medium, or any other recording medium readable by a computer.

Various features or functional modules of the device used in the above embodiments may be implemented or executed by circuits (for example, monolithic or multi-chip integrated circuits). Circuits designed to execute the functions described in this description may include general-purpose processors, digital signal processors (DSPs), application-specific integrated circuits (ASICs), field-programmable gate arrays (FPGAs) or other programmable logic devices, discrete gates or transistor logic, or discrete hardware components, or any combination of the above. The general-purpose processor may be a microprocessor, or may be any existing processor, controller, microcontroller, or state machine. The circuit may be a digital circuit or an analog circuit. When new integrated circuit technologies that replace existing integrated circuits emerge because of the advances in semiconductor technology, one or a plurality of embodiments of the present disclosure may also be implemented using these new integrated circuit technologies.

Furthermore, the present disclosure is not limited to the embodiments described above. Although various examples of the described embodiments have been described, the present disclosure is not limited thereto. Fixed or non-mobile electronic devices installed indoors or outdoors, such as AV equipment, kitchen equipment, cleaning equipment, air conditioners, office equipment, vending machines, and other household appliances, may be used as terminal devices or communications devices.

The embodiments of the present disclosure have been described in detail above with reference to the accompanying drawings. However, the specific structures are not limited to the above embodiments. The present disclosure also includes any design modifications that do not depart from the substance of the present disclosure. **In** addition, various modifications may be made to the present disclosure within the scope of the claims. Embodiments resulted from the appropriate combinations of the technical means disclosed in different embodiments are also included within the technical scope of the present disclosure. In addition, components with the same effect described in the above embodiments may be replaced with one another.

## Claims

1. An RRC connection resumption method performed by user equipment, comprising:
transmitting, to a first network, an RRC resume request message requesting resumption of an RRC connection with the first network;
receiving an RRC resume message from the first network; and
when the RRC resume message indicates activation of a secondary cell group, if the user equipment prefers not to activate the secondary cell group, transmitting, to the first network, indication information indicating that the user equipment prefers not to activate the secondary cell group.

2. The method according to claim 1, further comprising:
if the user equipment prefers not to activate the secondary cell group, performing any one of the following:
when the RRC resume message indicates configuration of a new secondary cell group, configuring the new secondary serving cell according to the RRC resume message, but skipping activating the new secondary cell group;
when the RRC resume message indicates configuration of a new secondary cell group, skipping performing configuration of the new secondary cell group indicated by the RRC resume message;
when the RRC resume message indicates resumption of an existing secondary cell group, skipping performing resumption of the existing secondary cell group indicated by the RRC resume message; and
when the RRC resume message indicates resumption of an existing secondary cell group, resuming the existing secondary cell group indicated by the RRC resume message, but skipping activating the existing secondary cell group.

3. The method according to claim 1, wherein the indication information further comprises information indicating any one of the following:
a new secondary cell group indicated by the RRC resume message is not configured;
a new secondary cell group indicated by the RRC resume message is configured, but is not activated;
an existing secondary cell group indicated by the RRC resume message is not resumed; and
an existing secondary serving cell indicated by the RRC resume message is resumed, but is not activated.

4. The method according to claim 1, further comprising:
in the case that data is transmitted via inter-frequency carrier aggregation between a secondary serving cell indicated by the RRC resume message and another secondary serving cell in an activated state or a primary serving cell in which the user equipment is located in the first network, when the secondary serving cell the activation of which is indicated by the RRC resume message and the primary serving cell operate in different frequency bands, if the user equipment prefers not to activate the secondary serving cell, transmitting, to the first network, indication information indicating that the user equipment prefers not to activate the secondary serving cell.

5. The method according to claim 1, further comprising:
in the case that the user equipment is configured by the first network so as to be allowed to use only part of hardware capabilities of the user equipment to communicate with the first network, when the RRC resume message indicates activation of a secondary cell group, if the user equipment prefers not to activate the secondary cell group, transmitting, to the first network, indication information indicating that the user equipment prefers not to activate the secondary cell group.

6. An RRC connection resumption method performed by user equipment, comprising:
transmitting, to a first network, an RRC resume request message requesting resumption of an RRC connection in the first network, wherein if the user equipment prefers not to activate a secondary cell group, the RRC resume request message comprises indication information indicating that the user equipment prefers not to activate the secondary cell group;
receiving an RRC resume message from the first network; and
resuming the RRC connection with the first network on the basis of the RRC resume message.

7. The method according to claim 6, further comprising:
if it is determined, according to context information stored by the user equipment, that a secondary cell group needs to be activated upon entering an RRC connected state in the first network, but the user equipment does not wish to activate the secondary cell group, including, in the RRC resume request message, indication information indicating that the user equipment does not wish to activate the secondary cell group.

8. The method according to claim 6, further comprising:
in the case that the RRC resume request message requesting resumption of the RRC connection in the first network is transmitted to the first network, if it is determined that the user equipment is in a dual connected state in the first network, releasing configuration information related to the dual connected state.

9. The method according to any one of claims 1 to 8, wherein the user equipment preferring not to activate the secondary cell group comprises the user equipment being in a MUSIM state.

10. User equipment, comprising:
a processor; and
a memory, having instructions stored therein,
wherein the instructions, when run by the processor, perform the method according to any one of claims 1 to 9.
